# FASCICULE DE BREVET EUROPEEN

(11) **EP 3 627 660 B1**
(45) Date de publication et mention de la délivrance du brevet: **28.10.2026**
(21) Numéro de dépôt: 19198084.6
(22) Date de dépôt: 18.09.2019
(51) Int. Cl.: H02K 1/22, H02K 1/28, H02K 15/00, H02K 17/16

(54) **TÔLE MAGNÉTIQUE POUR ROTOR AVEC UN ARBRE NON TRAVERSANT, PROCÉDÉ D'OBTENTION D'UNE TELLE TÔLE ET ROTOR ASSOCIÉ**
MAGNETBLECH FÜR ROTOR MIT EINER NICHT DURCHGEHENDEN WELLE, HERSTELLUNGSVERFAHREN EINES SOLCHEN BLECHS UND ENTSPRECHENDER ROTOR
MAGNETIC SHEET FOR ROTOR WITH A NON-THROUGH SHAFT, METHOD FOR OBTAINING SUCH A SHEET AND ASSOCIATED ROTOR

(30) Priorité: 19.09.2018 FR 1858469
(43) Date de publication de la demande: 25.03.2020
(73) Titulaire: GE Energy Power Conversion Technology Ltd, Rugby, Warwickshire CV21 1BD (GB)
(72) Inventeur: GALMICHE, Christophe, 54200 TOUL (FR)
(74) Mandataire: Casalonga

(56) Documents cités:
- EP-A1- 0 656 156
- EP-A1- 3 048 703
- EP-B1- 0 656 156
- DE-A1- 102014 011 585
- DE-A1- 2 238 755
- DE-C- 920 139
- DE-T2- 69 311 530
- GB-A- 364 027
- GB-A- 523 311
- JP-A- 2006 345 657
- JP-A- 2015 035 918
- US-A1- 2016 211 711
- US-A1- 2018 076 700
- US-B1- 6 177 750

## Description

La présente invention concerne les machines électriques tournantes et se rapporte plus particulièrement à un dispositif de blocage de tôles magnétiques incorporées dans un rotor feuilleté de la machine comprenant un arbre non traversant.

La présente invention concerne également une machine électrique tournante comprenant un tel rotor et un procédé de fabrication de tôles magnétiques et d'un tel rotor.

Le rotor feuilleté d'une machine électrique tournante destinée à fonctionner à des vitesses de rotation élevées, notamment jusqu'à 300 m/s, comprend un arbre non-traversant de sorte que les tôles magnétiques du rotor ne comportent pas d'évidement en leur centre afin de minimiser les contraintes mécaniques qui, dans le cas d'un rotor comprenant un arbre traversant, se concentrent autour de l'évidement et sont susceptibles d'endommager les tôles magnétiques.

Le document GB523311A décrit un rotor feuilleté comprenant un arbre non traversant pour un moteur électrique.

Le document EP0609645 décrit un rotor feuilleté comprenant un arbre non traversant pour un moteur électrique asynchrone.

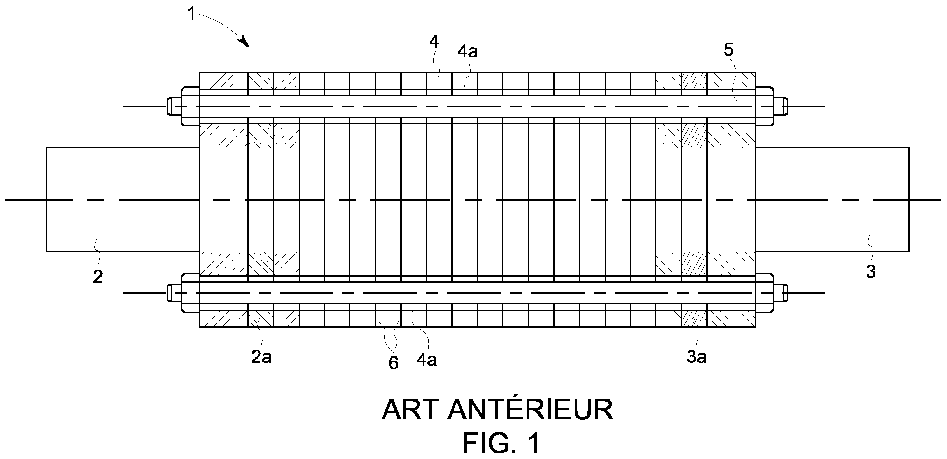

On se réfère à la figure 1 qui représente une coupe d'un tel rotor 1 selon une direction axiale.

Le rotor comprend deux demi-arbres 2 et 3 entre lesquels sont insérées des tôles magnétiques 4 maintenus compactées par des tirants 5 reliant les deux demi-arbres 2 et 3.

Les deux-demi arbres 2 et 3 comprennent respectivement des couronnes ou disques de court-circuit 2a et 3a reliant des barres conductrices (non représentées), par exemple en cuivre, formant une cage d'écureuil.

Chaque tôle magnétique 4 comprend des trous 4a dans lesquels sont insérés les tirants 5.

Chaque tôle 4 est enduite d'une couche de vernis d'isolation 6 empêchant un contact électrique entre des tôles adjacentes de manière à minimiser les pertes par courant de Foucault et augmenter le rendement du moteur.

Les trous 4a sont dimensionnés de sorte que les tirants 5 puissent être insérés dans les trous 4a de l'ensemble des tôles 4 empilées lors de la construction du rotor et de sorte qu'un jeu subsiste pour absorber l'augmentation du diamètre des tirants sous l'effet de la chaleur lors du fonctionnement du rotor.

Les tôles magnétiques 4 sont maintenues entre elles par adhérence de cisaillement sous l'effet du compactage des tôles, de la présence de rugosité sur la surface des tôles magnétiques et du vernis d'isolation électrique.

Cependant, lors du démarrage et de l'arrêt du moteur, celui-ci passe par une vitesse de rotation critique correspondant à un de ses modes propres du rotor.

Lorsque la vitesse de rotation critique est atteinte, le rotor fléchit et vibre.

De plus, lors du fonctionnement du moteur, le rotor est soumis à des vibrations, des chocs et des échauffements thermiques.

Ces phénomènes sont susceptibles de provoquer un glissement radial des tôles entraînant un jeu radial J entre les tôles magnétiques.

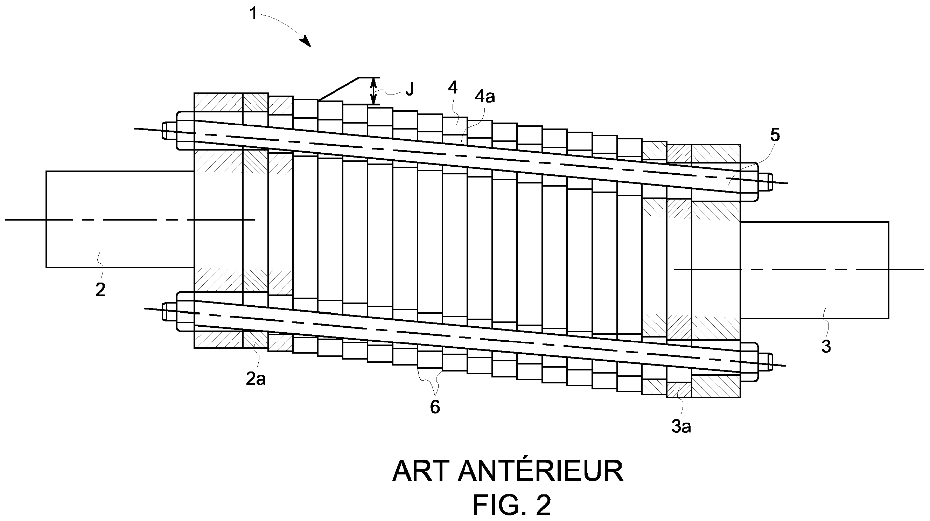

Les deux demi-arbres ne sont plus coaxiaux comme représenté à la figure 2 provoquant de fortes vibrations du rotor pouvant entraîner un arrêt d'urgence, voire la destruction du rotor.

Afin de limiter le glissement radial des tôles magnétiques, la vitesse de rotation ou la puissance électrique du rotor est limitée de sorte que la température des tôles magnétiques ne dépasse par la température de transition vitreuse T1 du vernis d'isolation.

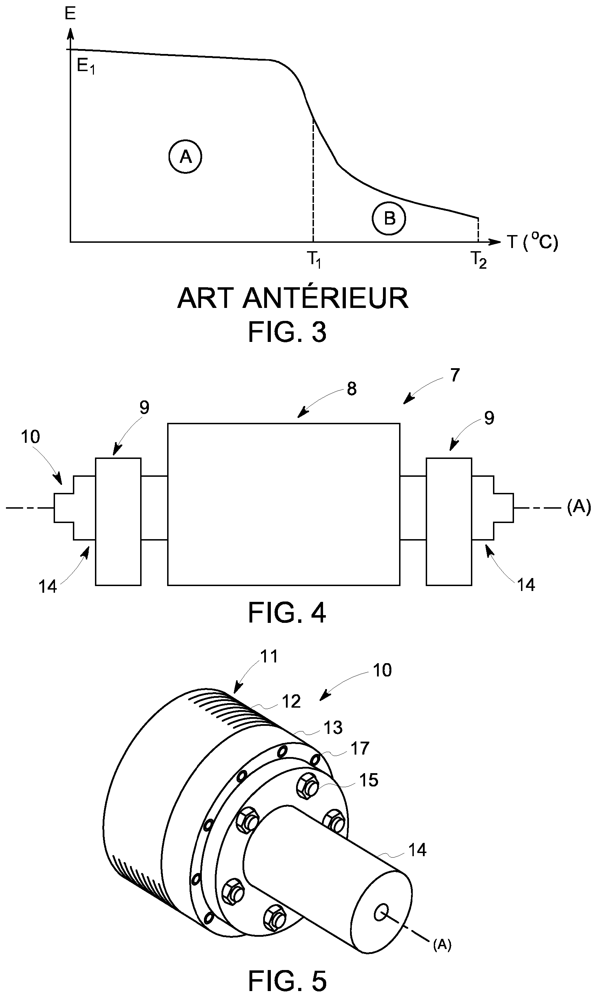

On se réfère à la figure 3 qui illustre l'évolution du module de Young E du vernis d'isolation en fonction de la température T.

La caractéristique du module de Young présente un premier domaine A s'étendant dans un intervalle de température jusqu'à la température T1 de transition vitreuse et deuxième domaine B pour des températures T supérieures à la température de transition vitreuse T1.

Le module de Young décroît rapidement dans le domaine B.

Par conséquent, la vitesse de rotation ou la puissance électrique du rotor est limitée de manière à ce que la température du rotor avec arbre non traversant soit inférieure à la température T1 de transition vitreuse.

Par ailleurs, la puissance d'une machine électrique tournante est proportionnelle à sa vitesse de rotation.

Pour une machine électrique tournante de taille donnée, plus la vitesse de rotation du rotor est élevée, plus la puissance développée par la machine est importante.

La vitesse de rotation ou la puissance électrique est limitée par la valeur de la température de transition vitreuse T1.

Les documents JPH11220844 et JP2009273202 décrivent des procédés de fabrication d'un stator feuilleté dont les tôles comprennent des encoches pour maintenir les tôles les unes par rapport aux autres.

Dans le document JP2009273202 chaque tôle magnétique comprend plusieurs morceaux de tôles. Chaque tôle magnétique est segmentée.

Les documents JP2016096634, JP2009195099, JP2010119260 et US4110895 décrivent un rotor feuilleté dont chaque tôle magnétique comprend un évidement en leur centre. L'arbre rotorique traverse l'ensemble des tôles magnétiques compactées.

Dans le document JP2016096634, les tôles magnétiques sont embouties simultanément pour maintenir les tôles les unes par rapport aux autres et elles sont clavetées sur l'arbre du rotor.

Dans le document JP2009195099, chaque tôle magnétique est segmentée. Chaque morceau de tôle magnétique comporte une encoche pour assurer son positionnement angulaire par rapport aux segments adjacents.

Un tel rotor segmenté ne supporte pas une vitesse périphérique supérieure à 150 m/s.

Dans le document JP2010119260, les tôles magnétiques sont rabattues à leur extrémité de manière à s'emboîter dans une autre tôle. Les tôles magnétiques sont clavetées sur l'arbre.

Dans le document US4110895, les tôles magnétiques sont repliées à leur extrémité de manière à s'emboîter dans une autre tôle.

Dans le document US2016329783, chaque tôle magnétique comprend des languettes comprenant des encoches pour l'assemblage des tôles dans un rotor. Lorsque les tôles ont été assemblées et collées entre elles, les languettes sont retirées des tôles.

Cependant, les dispositifs de maintien de tôles magnétiques connus de l'état de la technique sont utilisés pour maintenir les tôles pendant des étapes d'assemblage d'un rotor ou d'un stator feuilleté.

De plus, les tôles magnétiques comprennent en leur centre un évidement configuré pour recevoir un arbre traversant.

Il est donc proposé de pallier les inconvénients liés à un rotor feuilleté comprenant un arbre non traversant selon l'état de la technique, notamment en empêchant ou en limitant le glissement radial des tôles magnétiques dans le rotor et en exploitant des températures du rotor supérieures à la température de transition vitreuse du vernis séparant les tôles magnétiques adjacentes et inférieures ou égales à la température maximale donnée par le fabricant du vernis.

Au vu de ce qui précède l'invention propose, selon un aspect, un rotor avec un arbre non traversant sans évidement en son centre pour machine électrique tournante comprenant une pluralité de tôles magnétiques compactées entre deux demi-arbres reliés par des tirants et comportant des trous de maintien circulaire, les tirants étant insérés dans les trous de maintien et séparés du bord des trous de maintien par des jeux,
- chaque tôle magnétique comprenant le même nombre de moyens de blocage,
- au moins un moyen de blocage comportant un bossage comprenant une première face formant une cavité et une deuxième face en saillie à partir de la tôle magnétique opposée à la première face, et un trou,
- une deuxième face du bossage d'une première tôle magnétique de la pluralité de tôles magnétiques coopérant avec un trou d'une deuxième tôle magnétique adjacente de la pluralité de tôles magnétiques de sorte que la deuxième face du bossage de la première tôle magnétique est insérée dans le trou de la deuxième tôle magnétique adjacente, et
un jeu sépare un premier côté de la deuxième face du bossage d'un bord du trou, et un deuxième côté de la seconde face du bossage est en contact avec le bord du trou.

Avantageusement, le rotor comprend au moins deux moyens de blocage différents répartis uniformément sur un diamètre de la tôle.

De préférence, le moyen de blocage est circulaire, cylindrique, conique ou sensiblement sphérique, carré, triangulaire, polygonal ou oblong orienté de sorte que la plus grande dimension soit orientée selon une direction radiale ou selon une direction perpendiculaire à une direction radiale.

Selon une autre caractéristique, la position des trous de maintien et des moyens de blocage sur la tôle magnétique est déterminée de sorte que lors de l'assemblage de tôles magnétiques, chaque tôle magnétique issue d'un même rouleau laminé est décalée d'un angle prédéterminé, par exemple d'un angle de 120°, de préférence 90°.

Selon une caractéristique, le moyen de blocage est apte à coopérer avec un élément adjacent, un élément adjacent comprend une tôle magnétique, un demi-arbre ou un disque de court-circuit comprenant des moyens de blocage coopérant avec les moyens de blocage de la tôle magnétique de sorte que les tôles magnétiques soient immobilisées selon une direction radiale et/ou tangentielle du rotor.

Avantageusement, au moins un demi-arbre comprend une partie centrale comprenant en son centre un trou borgne, un lamage ou une cavité de forme conique à angle.

Selon encore un autre aspect, il est proposé une machine électrique tournante comprenant un rotor telle que définie précédemment.

Selon encore un autre aspect, il est proposé un procédé d'obtention d'un rotor avec un arbre non traversant sans évidemment en son centre pour machine électrique tournante, dans lequel :
- on réalise une pluralité de tôles magnétiques comprenant chacune moins un moyen de blocage, le moyen de blocage comprenant une première face formant une cavité et une deuxième face en saillie à partir de la tôle magnétique opposée à la première face, et un trou,
- on insère entre deux demi-arbres la pluralité de tôles magnétiques de sorte qu'une deuxième face du bossage d'une première tôle magnétique de la pluralité de tôles magnétiques coopère avec un trou d'une deuxième tôle magnétique adjacente de la pluralité de tôles magnétiques afin de que la deuxième face du bossage de la première tôle magnétique soit insérée dans le trou de la deuxième tôle magnétique adjacente, un jeu séparant un premier côté de la deuxième face du bossage d'un bord du trou, et un deuxième côté de la seconde face du bossage étant en contact avec le bord du trou, et
- on insère des tirants passant par des trous de maintien de chacune des tôles magnétiques et reliant les deux-demi arbres de sorte que les tôles magnétiques soient maintenues compactées entre les deux demi-arbres, les tirants étant séparés du bord des trous de maintien par des jeux.

Avantageusement, on réalise le bossage par poinçonnage de préférence sur sensiblement une demi-épaisseur de tôle.

De préférence, on réalise les moyens de blocage lorsque la tôle magnétique est insérée et compactée entre deux demi-arbres ou entre deux disques de court-circuit eux-mêmes compactés entre les demi-arbres.

Avantageusement, on réalise partiellement le moyen de blocage par préformage dans la tôle magnétique, et dans lequel la forme et les dimensions définitives du moyen de blocage sont réalisées lors d'une étape de compactage lorsque la tôle magnétique est insérée entre deux demi-arbres ou entre deux disques de court-circuit compactés entre deux demi-arbres.

D'autres caractéristiques et avantages de l'invention apparaîtront à la lecture de la description qui suit de modes de réalisation de l'invention, donnés uniquement à titre d'exemples non limitatifs et en référence aux dessins sur lesquels :
- les figures 1 et 2, dont il a déjà été fait mention, illustrent un rotor comprenant un arbre non traversant d'une machine tournante électrique selon l'état de la technique ;
- la figure 3, dont il a déjà été fait mention, illustre l'évolution du module de Young d'un vernis d'isolation des tôles magnétiques en fonction de la température du rotor ;
- la figure 4 illustre un mode de réalisation d'une machine électrique tournante ;
- la figure 5 illustre une portion d'un rotor feuilleté pour une machine électrique tournante asynchrone ;
- la figure 6 illustre une vue partielle d'un mode de réalisation du circuit magnétique ;
- la figure 7 illustre un premier mode de réalisation des moyens de blocage de tôles magnétiques ;
- la figure 8 illustre un deuxième mode de réalisation des moyens de blocage de tôles magnétiques ;
- les figures 9 et 10 illustrent des exemples de disposition des moyens de blocage sur des tôles magnétiques ;
- les figures 11 et 12 illustrent des exemples de réalisation de tôles magnétiques comprenant des trous oblongs ;
- la figure 13 illustre un troisième mode de réalisation des moyens de blocage de tôles magnétiques hors invention ;
- la figure 14 illustre un quatrième mode de réalisation des moyens de blocage de tôles magnétiques hors invention ;
- la figure 15 illustre un cinquième mode de réalisation des moyens de blocage de tôles magnétiques hors invention;
- la figure 16 illustre un sixième mode de réalisation des moyens de blocage de tôles magnétiques hors invention;
- la figure 17 illustre un septième mode de réalisation des moyens de blocage de tôles magnétiques hors invention;
- la figure 18 illustre un huitième mode de réalisation des moyens de blocage de tôles magnétiques hors invention;
- la figure 19 illustre un premier mode de réalisation d'un rotor pour une machine électrique tournante synchrone ou asynchrone à rotor bobiné ;
- la figure 20 illustre un premier mode de réalisation d'un rotor pour une machine électrique tournante asynchrone ;
- la figure 21 illustre un deuxième mode de réalisation d'un rotor pour une machine électrique tournante synchrone ou asynchrone à rotor bobiné hors invention;
- la figure 22 illustre un troisième mode de réalisation d'un rotor pour une machine électrique tournante synchrone ou asynchrone à rotor bobiné comprenant un neuvième mode de réalisation de moyens de blocage de tôles magnétiques hors invention;
- la figure 23 illustre un quatrième mode de réalisation d'un rotor pour une machine électrique tournante synchrone ou asynchrone à rotor bobiné comprenant plusieurs modes de réalisation de moyens de blocage de tôles magnétiques hors invention;
- la figure 24 illustre un cinquième mode de réalisation d'un rotor pour une machine électrique tournante synchrone ou asynchrone à rotor bobiné comprenant plusieurs modes de réalisation de moyens de blocage de tôles magnétiques hors invention;
- la figure 25 illustre un sixième mode de réalisation d'un rotor pour une machine électrique tournante synchrone ou asynchrone à rotor bobiné comprenant plusieurs modes de réalisation de moyens de blocage de tôles magnétiques hors invention;
- les figures 26 et 27 illustrent un septième mode de réalisation d'un rotor pour une machine électrique tournante asynchrone comprenant plusieurs modes de réalisation de moyens de blocage de tôles magnétiques hors invention;
- la figure 28 illustre un premier mode de réalisation d'un rotor ;
- la figure 29 illustre un deuxième mode de réalisation d'un rotor hors invention;
- la figure 30 illustre la configuration initiale du deuxième mode de réalisation du rotor ;
- la figure 31 illustre la configuration finale du deuxième mode de réalisation du rotor ;
- la figure 32 illustre un troisième mode de réalisation d'un rotor;
- la figure 33 illustre la configuration initiale du troisième mode de réalisation du rotor ; et
- la figure 34 illustre la configuration finale du troisième mode de réalisation du rotor.

On se réfère à la figure 4 qui illustre un mode de réalisation d'une machine électrique tournante 7 comprenant un stator 8, des paliers 9 et un rotor 10 inséré dans le stator 8 et les paliers 9.

Le rotor 10 comprend un arbre rotorique non traversant comprenant deux demi-arbres 14 et un axe (A) confondu avec l'axe de rotation du rotor 10.

On se réfère à la figure 5 qui illustre une portion d'un rotor feuilleté 10 pour une machine électrique tournante asynchrone.

Le rotor comprend un circuit magnétique 11 comprenant des tôles magnétiques 12 compactées entre deux disques de court-circuit (un disque 13 de court-circuit est représenté) maintenus entre les deux demi-arbres (un demi-arbre 14 est représenté).

Le rotor 10 comprend en outre des tirants 15 reliant les demi-arbres 14 de sorte que les tôles magnétiques 12 soient maintenues compactées.

Chaque tôle magnétique 12 comprend des trous circulaires 16 de maintien (non représentés) répartis uniformément sur un diamètre de la tôle de sorte qu'un tirant 15 reliant les deux demi-arbres passe par un trou de maintien.

Le rotor 10 comprend en outre des barres 17 métalliques conductrices insérées dans des trous de support 18 (non représentés) répartis uniformément sur un diamètre de la tôle de sorte que les barres 17 et les disques 13 de court-circuit forment une cage d'écureuil.

Chaque tôle magnétique 12 est enduite d'un vernis d'isolation électrique et ne comprend aucun évidement central.

Selon un autre mode de réalisation, le rotor feuilleté peut comprendre des enroulements rotoriques insérés dans des logements formés par les tôles magnétiques. Dans ce mode de réalisation, le rotor ne comprend pas de disque de court-circuit et les trous de support 18 sont remplacés par les logements configurés pour recevoir les enroulements rotoriques.

Le rotor feuilleté selon ce mode de réalisation est incorporé dans une machine électrique tournante synchrone.

Le rotor feuilleté comprenant les enroulements rotoriques est incorporé dans une machine électrique tournante asynchrone à rotor bobiné.

Le court-circuitage du bobinage est réalisé en dehors du circuit magnétique 11, dans un dispositif d'alimentation électrique du rotor bobiné.

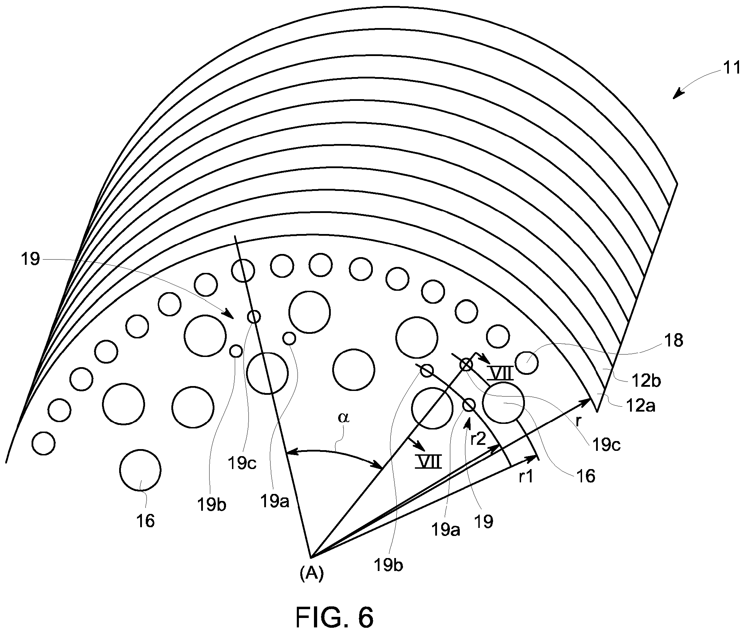

On se réfère à la figure 6 qui illustre une vue partielle d'un mode de réalisation du circuit magnétique 11.

Le circuit magnétique 11 comprend une pluralité de tôles magnétiques identiques aux tôles 12, notamment des tôles magnétiques référencées 12a et 12b.

Chaque tôle magnétique 12, 12a et 12b comprend en outre des moyens de blocage 19 destinés à coopérer avec des éléments adjacents de manière à empêcher un déplacement relatif de ladite tôle par rapport aux éléments adjacents.

Selon la position de la tôle magnétique 12, 12a et 12b dans le circuit magnétique 11, les éléments adjacents comprennent d'autres tôles magnétiques 12 ou une tôle magnétique 12 et un disque 13 de court-circuit ou une tôle magnétique 12 et un demi-arbre 14.

Afin de compenser les défauts d'épaisseur des tôles magnétiques 12, 12a et 12b provoqués par le laminage des tôles magnétiques connus sous les termes lignes de rives, la position des trous de maintien 16, des trous de support 18 et des moyens de blocage 19 est déterminée de sorte que lors de l'assemblage du circuit magnétique 11, chaque tôle magnétique 12 issue d'un même rouleau laminé est décalée d'un angle prédéterminé, par exemple d'un angle de 120°, de préférence 90°.

Le nombre de moyens de blocage sur chaque tôle magnétique 12 est déterminé de manière à limiter ou empêcher un déplacement radial de la tôle 12 dans le circuit magnétique 11.

Les moyens de blocage 19 sont répartis uniformément sur toute la surface de la tôle magnétique 12, 12a et 12b.

Chaque tôle magnétique 12 a un rayon de valeur r.

Les moyens de blocage 19 comprennent, par exemple des moyens de blocage 19a, 19b et 19c formant un motif. Le motif est répété sur la surface de la tôle magnétique selon un angle α orienté selon une direction axiale et les moyens de blocage 19a, 19b et 19c sont situés respectivement à une distance radiale r2 et r1 du centre de la tôle 12 circulaire.

La valeur de l'angle α est égale à la valeur de l'angle prédéterminée de décalage des tôles magnétiques, c'est-à-dire un multiple de l'angle entre chaque trou de maintien 16 et chaque trou de support 18.

La valeur des rayons r1 et r2 est déterminée de sorte qu'elle soit proche de la valeur du rayon r de la tôle magnétique tout en permettant l'insertion des trous de maintien 16, des trous de support 18 dans la tôle 12 et de manière à empêcher le déplacement radial ou tangentiel des tôles 12.

Les moyens de blocage 19a, 19b et 19c coopèrent avec des moyens de blocage 19d, 19e et 19f disposés sur la tôle magnétique référencée 12b.

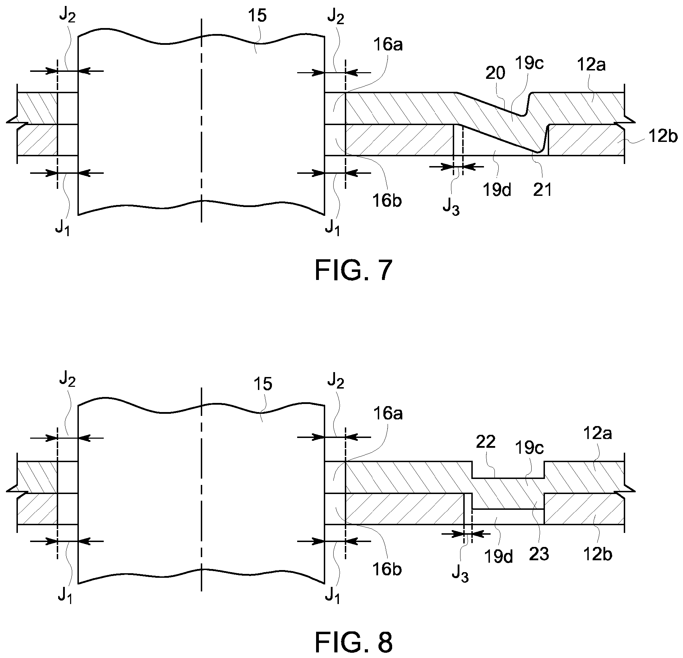

On se réfère à présent à la figure 7 qui représente une coupe partielle des tôles magnétiques référencées 12a et 12b comportant un premier mode de réalisation des moyens de blocage selon le plan de coupe (VII-VII).

On retrouve le tirant 15 inséré dans des trous de maintien 16a et 16b des tôles 12a et 12b.

Le tirant 15 est séparé du bord des trous de maintien 16a et 16b respectivement par des jeux J1 et J2 de sorte que lors de la variation du diamètre du tirant 15 sous l'effet de la chaleur ou de sorte que lors de l'insertion du tirant 15 dans le circuit magnétique 11 pendant la construction du circuit magnétique.

Le tirant 15 ne rentre pas en contact avec le bord des trous de maintien.

Le moyen de blocage 19c de la tôle magnétique 12a comprend un bossage comprenant une première face 20 formant une cavité et une deuxième face 21 en saillie à partir de la tôle magnétique opposée à la première face.

Le moyen de blocage 19d de la tôle magnétique 12b comprend un trou coopérant avec le bossage de sorte que la deuxième face 21 s'insère dans le trou.

Le trou et le bossage sont dimensionnés de sorte qu'un jeu J3 sépare un premier coté de la deuxième face du bord du trou, le deuxième coté de la deuxième face étant en contact avec le bord du trou.

La valeur du jeu J3 séparant le bossage du trou est inférieure à la valeur des jeux J1, J2 séparant le tirant des trous de maintien permettant l'insertion du tirant 15 dans le circuit magnétique 11 ou la variation du diamètre du tirant 15 sous l'effet de la chaleur et permettant un positionnement et un blocage plus précis des tôles adjacentes 12a et 12b.

Selon un autre mode de réalisation, lorsque la valeur du jeu J3 est fixée, la valeur des jeux J1, J2 est réduite afin de minimiser les contraintes mécaniques subies par le tirant 15 sous l'effet de la force centrifuge déplaçant selon une direction radiale le tirant 15 lorsque le rotor est animé d'un mouvement de rotation.

Le trou et le bossage peuvent être par exemple de forme circulaire, cylindrique, conique ou sensiblement sphérique. Les formes du trou et du bossage étant choisies de sorte que chaque bossage coopère avec un trou.

Les bossages et les trous sont disposés sur chacune des tôles magnétiques insérées dans le circuit magnétique 11 de sorte que les tôles magnétiques se déplacent dans une direction radiale relativement l'une par rapport à l'autre d'une distance maximale égale au jeu J3 séparant le premier coté de chaque bossage du bord d'un trou.

Les moyens de blocage 19a et 19b de la tôle magnétique 12a peuvent comporter par exemple chacun un bossage coopérant avec un trou des moyens de blocage 19e et 19f de la tôle magnétique 12b.

Le bossage est obtenu par emboutissage de la tôle magnétique 12a et le trou est obtenu par exemple par poinçonnage de la tôle magnétique 12b.

On se réfère à présent à la figure 8 qui représente une coupe partielle des tôles magnétiques référencées 12a et 12b comportant un deuxième mode de réalisation des moyens de blocage selon le plan de coupe (VII-VII).

On retrouve le tirant 15 inséré dans les trous de maintien 16a et 16b des tôles 12a et 12b, les jeux J1, J2 et J3, et le moyen de blocage 19d comportant un trou dans la tôle magnétique 12b.

Le moyen de blocage 19c de la tôle magnétique 12a comprend un bossage comprenant une première face 22 formant une cavité et une deuxième face 23 en saillie à partir de la tôle magnétique opposée à la première face.

La deuxième face 23 et le trou coopèrent de sorte que la deuxième face s'insère dans le trou et le jeu J3 sépare un premier coté de la deuxième face du bossage du bord du trou, le deuxième coté de la deuxième face du bossage étant en contact avec le bord du trou.

Dans ce mode de réalisation, le bossage est obtenu par poinçonnage des tôles magnétiques et le trou est obtenu par exemple par poinçonnage.

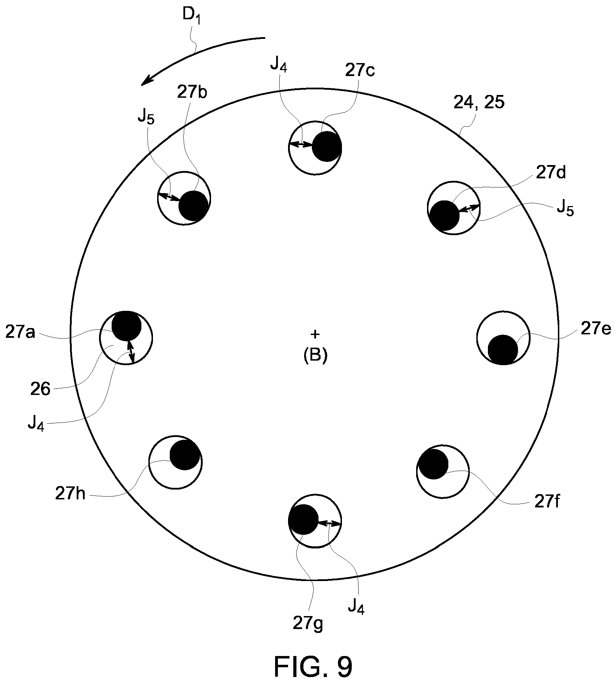

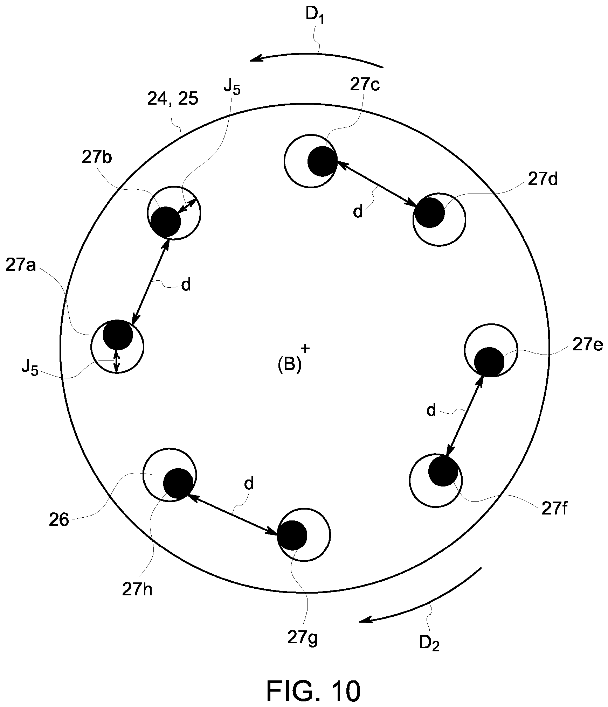

On se réfère à présent aux figures 9 et 10 qui illustrent deux exemples de disposition des moyens de blocage décrits précédemment sur des tôles magnétiques comprenant un axe (B) confondu avec l'axe de rotation du rotor intégrant lesdites tôles.

Afin de clarifier les explications, seules deux tôles magnétiques 24 et 25 sont représentées. Toutes les tôles magnétiques comprennent des moyens de blocage.

Les tôles magnétiques 24 et 25 sont superposées l'une sur l'autre.

La première tôle 24 comprend des trous 26 tous identiques coopérant avec des bossages par exemple circulaires 27a, 27b, 27c, 27d, 27e, 27f, 27g et 27h tous identiques tels que définis précédemment.

On se réfère plus particulièrement à la figure 9.

Une première partie de la surface des bossages 27a, 27c, 27e et 27g est en contact avec le bord d'un trou circulaire 26 et une deuxième partie de la surface des bossages est séparée du bord des trous 26 par un jeu J4 orienté selon une direction perpendiculaire à une direction radiale.

Une première partie de la surface des bossages 27b, 27d, 27f et 27h est en contact avec le bord d'un trou 26 et une deuxième partie de la surface des bossages est séparée du bord des trous 26 par un jeu J5 orienté selon une direction parallèle à une direction radiale.

Avantageusement, les bossages 27a, 27c, 27e et 27g maintiennent les tôles magnétiques 24 et 25 immobilisées entre elles sous l'effet du couple lorsque le rotor est en rotation dans le sens trigonométrique D1 et les bossages 27b, 27d, 27f et 27h maintiennent les tôles magnétiques 24 et 25 immobilisées entre elles lorsque le rotor est soumis à des chocs ou vibrations dirigés selon une direction radiale.

La figure 10 illustre les bossages 27a, 27b, 27c, 27d, 27e, 27f, 27g et 27h insérés dans les trous 26 de sorte que la première partie de chaque bossage soit en contact avec un trou 26, une distance d séparant la première partie de deux bossages adjacents soit la plus petite réalisable et le jeu J5 de direction perpendiculaire à une direction radiale sépare la deuxième partie de chaque bossage du bord du trou 26.

Avantageusement, les bossages 27a, 27b, 27c, 27d, 27e, 27f, 27g et 27h maintiennent les tôles magnétiques 24 et 25 immobilisées entre elles sous l'effet du couple lorsque le rotor est en rotation dans le sens trigonométrique D1 et anti-trigonométrique D2.

Selon un autre mode de réalisation, les orientations des bossages dans les trous décrites précédemment sont combinées afin d'immobiliser les tôles l'une par rapport aux autres lorsqu'elles sont soumises à un choc et/ou à un mouvement de rotation dans le sens trigonométrique ou anti-trigonométrique.

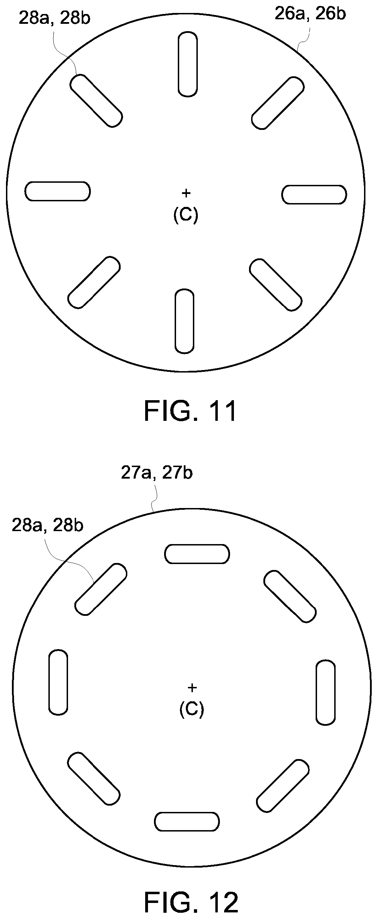

Les figures 11 et 12 illustrent des exemples de réalisation de tôles magnétiques 26a et 27a comprenant des trous oblongs 28a et des tôles adjacentes 26b et 27b comprenant des bossages oblongs 28b et un axe (C) confondu avec l'axe de rotation du rotor incorporant les tôles.

La figure 11 illustre les trous 28a et les bossages 28b oblongs dont la plus grande dimension est orientée selon une direction radiale et la figure 12 illustre les trous 28a et les bossages 28b oblongs dont la plus grande dimension est orientée selon une direction perpendiculaire à la direction radiale.

Dans l'exemple de réalisation selon la figure 11, les tôles magnétiques 26a et 26b sont immobilisées entre elles dans une direction privilégiée tangentielle aux tôles et dans une direction radiale.

Dans l'exemple de réalisation selon la figure 12, les tôles magnétiques 27a et 27b sont immobilisées entre elles dans une direction privilégiée radiale et dans une direction tangentielle.

L'immobilisation des tôles magnétiques selon une direction tangentielle permet de bloquer les tôles lorsqu'elles sont soumises à un couple dirigé selon l'axe (C) et l'immobilisation des tôles magnétiques selon une direction radiale permet de bloquer les tôles lorsqu'elles sont soumises à un choc dirigé selon une direction radiale et/ou des vibrations.

Selon d'autres modes de réalisation, les moyens de blocage 28a et 28b peuvent être des bossages comprenant chacun une première face formant une cavité et une deuxième face en saillie, les première et deuxième faces des bossages adjacents s'insérant sans jeu, se déformant par contact et se solidarisant afin que les tôles 26a, 26b, 27a, 27b soient immobilisées comme cela sera décrit dans ce qui suit.

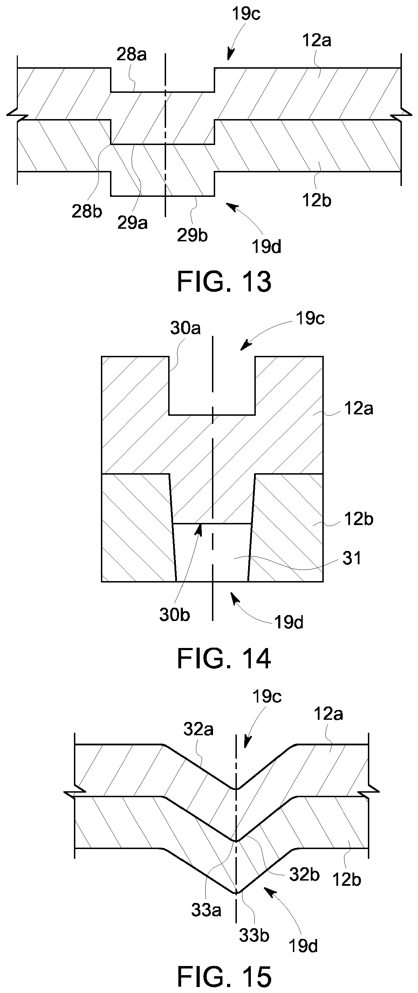

On se réfère à présent à la figure 13 qui représente une coupe partielle des tôles magnétiques référencées 12a et 12b comportant un troisième mode de réalisation des moyens de blocage selon le plan de coupe (VII-VII).

Le moyen de blocage 19c de la tôle magnétique 12a comprend un bossage comprenant une première face 28a formant une cavité et une deuxième face 28b en saillie à partir de la tôle magnétique opposée à la première face.

Le moyen de blocage 19d de la tôle magnétique référencée 12b comprend un bossage comprenant une première face 29a entrant dans la tôle magnétique 12a formant une cavité et une deuxième face 29b en saillie à partir de la tôle magnétique opposée à la première face.

La deuxième face 28b du moyen de blocage de la tôle magnétique référencée 12a et la première face 29a du moyen de blocage de la tôle magnétique référencée 12b sont dimensionnées de sorte que la deuxième face 28b s'insère sans jeu dans la première face 29a de sorte que les tôles 12a et 12b soient immobilisées.

Les deux moyens de blocage 19c et 19d sont en contact et solidarisés.

Les moyens de blocage sont obtenus par poinçonnage.

On se réfère à présent à la figure 14 qui représente une coupe partielle des tôles magnétiques référencées 12a et 12b comportant un quatrième mode de réalisation des moyens de blocage selon le plan de coupe (VII-VII).

Le moyen de blocage 19c de la tôle magnétique référencée 12a comprend un bossage comprenant une première face 30a formant une cavité et une deuxième face 30b en saillie à partir de la tôle magnétique opposée à la première face.

Le moyen de blocage 19d de la tôle magnétique référencée 12b comprend un trou conique 31.

Le trou conique 31 et la partie saillante de la deuxième face 30b sont dimensionnés de sorte que la deuxième face 30b s'encastre dans le trou conique 31.

Lorsque la deuxième face 30b est enfoncée dans le trou conique 31, les deux surfaces en contact se déforment et se solidarisent.

Les deux moyens de blocage 19c et 19d sont solidarisés.

Les moyens de blocage 19c et 19d sont obtenus par exemple par poinçonnage.

On se réfère à présent à la figure 15 qui représente une coupe partielle des tôles magnétiques référencées 12a et 12b comportant un cinquième mode de réalisation des moyens de blocage selon le plan de coupe (VII-VII).

Le moyen de blocage 19c de la tôle magnétique référencée 12a comprend un bossage comprenant une première face 32a formant une cavité et une deuxième face 32b en saillie à partir de la tôle magnétique opposée à la première face.

Le moyen de blocage 19d de la tôle magnétique référencée 12b comprend un bossage comprenant une première face 33a formant une cavité et une deuxième face 33b en saillie à partir de la tôle magnétique opposée à la première face.

La deuxième face 32b du moyen de blocage de la tôle magnétique référencée 12a et la première face 33a du moyen de blocage de la tôle magnétique référencée 12b sont dimensionnées de sorte que la deuxième face 32b s'insère sans jeu dans la première face 33a de sorte que les tôles 12a et 12b soient immobilisées.

Les deux moyens de blocage 19c et 19d sont en contact et solidarisés.

Les bossages 19c et 19d sont obtenus par emboutissage.

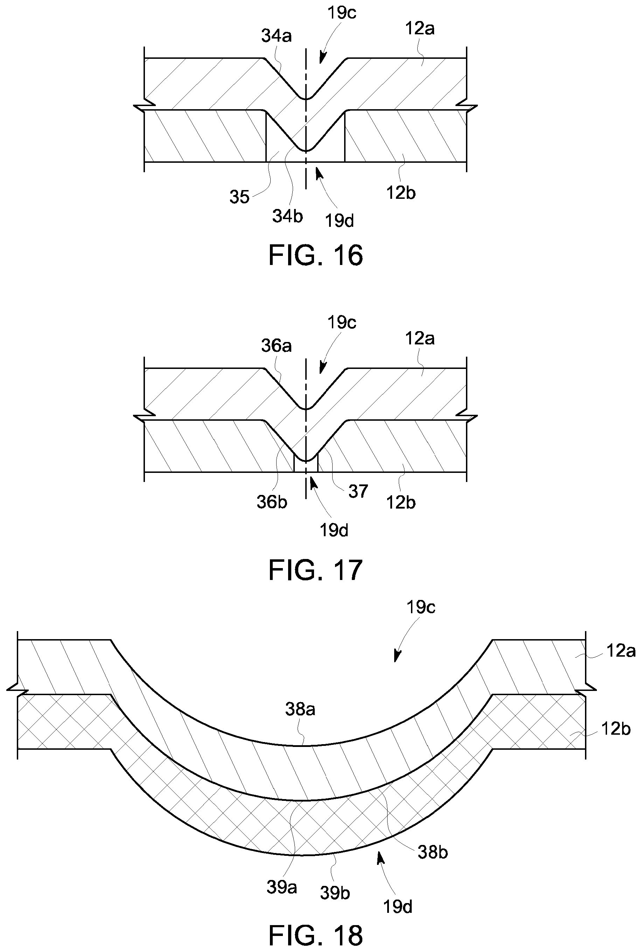

On se réfère à présent à la figure 16 qui représente une coupe partielle des tôles magnétiques référencées 12a et 12b comportant un sixième mode de réalisation des moyens de blocage selon le plan de coupe (VII-VII).

Le moyen de blocage 19c de la tôle magnétique 12a comprend un bossage comprenant une première face 34a formant une cavité et une deuxième face 34b en saillie à partir de la tôle magnétique opposée à la première face.

Le moyen de blocage 19d de la tôle magnétique 12b comprend un trou 35.

Le trou 35 et la deuxième face 34b sont dimensionnés de sorte que la deuxième face 34b s'encastre dans le trou 35.

Lorsque la deuxième face 34b est enfoncée dans le trou 35, les deux surfaces en contact se déforment et se solidarisent.

Les deux moyens de blocage 19c et 19d sont solidarisés.

Le bossage 19c est obtenu par emboutissage de la tôle magnétique 12a, et le trou 35 est obtenu par exemple par poinçonnage de la tôle magnétique 12b.

On se réfère à présent à la figure 17 qui représente une coupe partielle des tôles magnétiques référencées 12a et 12b comportant un septième mode de réalisation des moyens de blocage selon le plan de coupe (VII-VII).

Le moyen de blocage 19c de la tôle magnétique référencée 12a comprend un bossage comprenant une première face 36a formant une cavité et une deuxième face 36b en saillie à partir de la tôle magnétique opposée à la première face.

Le moyen de blocage 19d de la tôle magnétique référencée 12b comprend un trou conique 37, débouchant par exemple dans un trou cylindrique.

Le trou conique 37 et la deuxième face 36b sont dimensionnés de sorte que la deuxième face 36b s'encastre dans le trou conique 37.

Lorsque la deuxième face 36b est enfoncée dans le trou conique 37, les deux surfaces en contact se déforment et se solidarisent.

Les deux moyens de blocage 19c et 19d sont solidarisés, le bossage 19c est obtenu par emboutissage, et le trou conique 37 est obtenu par exemple par poinçonnage.

Dans les modes de réalisation décrits, la déformation et la solidarisation des moyens de blocage 19c et 19d sont réalisées par des différences de diamètres ou des différences d'angles entre la première face formant une cavité et la deuxième face en saillie.

On se réfère à présent à la figure 18 qui représente une coupe partielle des tôles magnétiques référencées 12a et 12b comportant un huitième mode de réalisation des moyens de blocage selon le plan de coupe (VII-VII).

Le moyen de blocage 19c de la tôle magnétique référencée 12a comprend un bossage comprenant une première face 38a formant une cavité et une deuxième face 38b en saillie à partir de la tôle magnétique opposée à la première face.

Le moyen de blocage 19d de la tôle magnétique référencée 12b comprend un bossage comprenant une première face 39a formant une cavité et une deuxième face 39b en saillie à partir de la tôle magnétique opposée à la première face.

La deuxième face 38b du moyen de blocage de la tôle magnétique référencée 12a et la première face 39a du moyen de blocage de la tôle magnétique référencée 12b sont dimensionnées de sorte que la deuxième face 38b s'insère sans jeu dans la première face 39a de sorte que les tôles 12a et 12b soient immobilisées.

Les deux bossages en contact se déforment et se solidarisent et sont par exemple circulaires.

Les bossages sont obtenus par emboutissage.

Dans les modes de réalisation deux à huit des moyens de blocage décrits précédemment aux figures 11 à 18, les moyens de blocage des tôles adjacents coopèrent de sorte que les moyens s'encastrent l'un dans l'autre.

Cet encastrement empêche un déplacement relatif d'une tôle magnétique par rapport à une autre tôle magnétique.

Dans les modes de réalisation décrits précédemment, le bossage comprenant la première face formant une cavité et une deuxième face en saillie peut être obtenu par poinçonnage par exemple sur la moitié de l'épaisseur de la tôle magnétique ou par emboutissage sur une profondeur équivalente à une fois l'épaisseur de la tôle magnétique, deux fois l'épaisseur de la tôle magnétique ou plus.

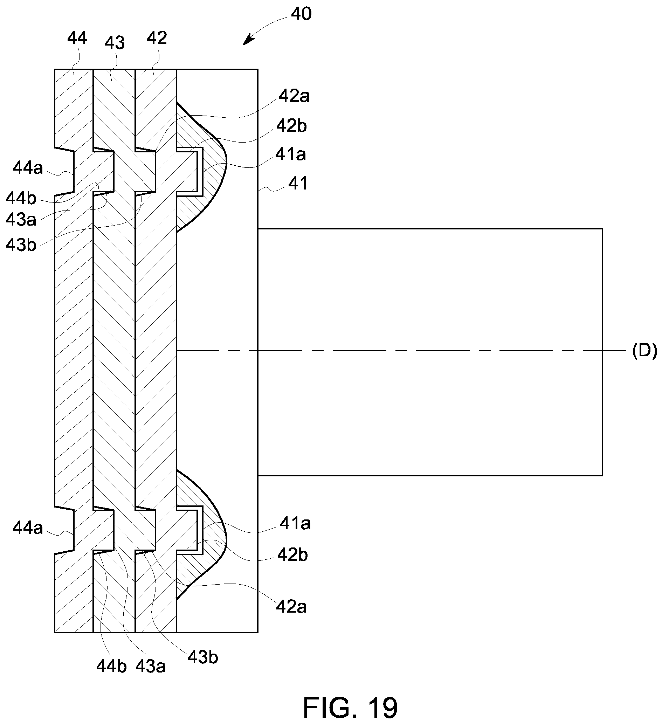

On se réfère à présent à la figure 19 qui illustre une coupe partielle d'un premier mode de réalisation d'un rotor 40 selon une direction axiale pour une machine électrique tournante synchrone ou asynchrone à rotor bobiné.

Le rotor 40 comprend un demi-arbre 41 comprenant des trous 41a, des tôles magnétiques 42, 43 et 44 toutes identiques empilées sur le demi-arbre 41 et un axe de rotation (D).

Chaque tôle 42, 43 et 44 comprend deux moyens de blocage selon le troisième mode de réalisation illustré à la figure 13. Chaque tôle magnétique comprend un bossage comprenant une première face 42a, 43a et 44a formant une cavité et une deuxième face 42b, 43b et 43c en saillie à partir de la tôle magnétique opposée à la première face.

La deuxième face 43b et 44b de chaque bossage des tôles magnétiques 43 et 44 s'insère dans la première face 42a et 43a de chaque bossage des tôles magnétiques et la deuxième face 42b de chaque bossage de la tôle 42 s'insère dans un trou 41a du demi-arbre 41.

Selon un autre mode de réalisation, la deuxième face 42b s'insère sans jeu dans le trou 41a et se déforment par contact et se solidarisent afin d'immobiliser la tôle magnétique et le demi-arbre.

Les moyens de blocage de chaque tôle magnétique sont insérés avec ou sans jeu dans des moyens de blocage des éléments adjacents, chaque élément adjacent comprenant une tôle magnétique ou un demi-arbre et sont répartis sur chaque tôle magnétique de manière à immobiliser selon une direction radiale et/ou tangentielle la tôle par rapport aux éléments adjacents lorsque la tôle est soumise à un choc ou des vibrations dans la direction radiale et/ou à une rotation sous l'effet d'un couple selon l'axe (D).

Par conséquent, chaque moyen de blocage est disposé sur une même circonférence de la tôle et les moyens de blocage sont répartis uniformément sur la tôle selon un angle orienté selon la direction axiale (D).

Les tôles magnétiques sont immobilisées avec ou sans jeu.

Selon un autre mode de réalisation non représenté, le trou 41a est remplacé par un téton venant s'insérer avec ou sans jeu dans les premières faces 42a, 43a et 44a formant une cavité.

Selon un autre mode de réalisation du rotor, le rotor comprend à une première extrémité un demi-arbre tel que représenté sur la figure 19 comprenant un trou 41a, et comprend à une deuxième extrémité un deuxième demi-arbre comprenant un téton coopérant avec le trou.

Selon d'autres modes de réalisation, chaque tôle magnétique peut comprendre plus de deux moyens de blocage selon un mode de réalisation ou selon des modes de réalisation différents. Les moyens de blocage sont répartis uniformément sur la tôle selon un angle orienté selon la direction axiale (D) sur une même circonférence de la tôle magnétique.

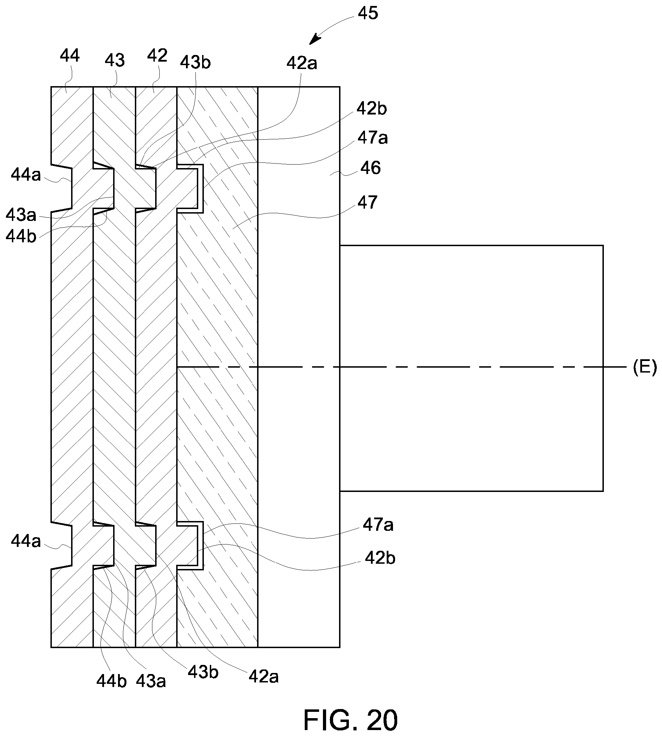

On se réfère à présent à la figure 20 qui illustre une coupe partielle d'un premier mode de réalisation d'un rotor 45 pour une machine électrique tournante asynchrone selon une direction axiale.

Le rotor 45 comprend un demi-arbre 46, un disque de court-circuit 47, les tôles magnétiques 42, 43 et 44 et un axe de rotation (E).

Le disque de court-circuit 47 est inséré entre le demi-arbre 46 et les tôles magnétiques.

Le disque de court-circuit 47 comprend des trous 47a coopérant avec la deuxième face 42b de chaque bossage de la tôle 42.

Les moyens de blocage de chaque tôle magnétique sont insérés avec ou sans jeu dans des moyens de blocage des éléments adjacents, chaque élément adjacent comprenant une tôle magnétique ou un disque de court-circuit et sont répartis sur chaque tôle magnétique de manière à immobiliser selon une direction radiale et/ou tangentielle la tôle par rapport aux éléments adjacents lorsque la tôle est soumise à un choc ou des vibrations dans une direction radiale et/ou à une rotation sous l'effet d'un couple selon l'axe (E).

Par conséquent, chaque moyen de blocage est disposé sur une même circonférence de la tôle et les moyens de blocage sont répartis uniformément sur la tôle selon un angle orienté selon la direction axiale (E).

Les tôles magnétiques sont immobilisées avec ou sans jeu.

Selon un autre mode de réalisation non représenté, le trou 47a est remplacé par un téton venant s'insérer avec ou sans jeu dans les premières faces 42a, 43a et 44a formant une cavité.

Selon un autre mode de réalisation du rotor, le rotor comprend à une première extrémité de son circuit magnétique un premier disque de court-circuit comprenant un trou tel que représenté à la figure 20 et comprend à une deuxième extrémité de son circuit magnétique un deuxième disque de court-circuit comprenant un téton coopérant avec le trou.

Selon d'autres modes de réalisation, chaque tôle magnétique peut comprendre plus de deux moyens de blocage selon l'un des modes de réalisation décrit précédemment, chaque moyen de blocage pouvant être selon un mode de réalisation différent. Les moyens de blocage sont répartis uniformément sur la tôle selon un angle orienté selon la direction axiale (E) sur une même circonférence de la tôle magnétique.

Selon d'autres modes de réalisation, les rotors 40 et 45 pour respectivement une machine électrique tournante synchrone ou asynchrone à rotor bobiné et asynchrone comprennent des moyens de blocage selon l'un des premier, deuxième, troisième, quatrième, cinquième, sixième, septième et huitième modes de réalisations tels de définis précédemment aux figures 7, 8, 13, 14, 15, 16, 17 et 18 disposés selon l'une quelconque des figures 9, 10, 11, 12.

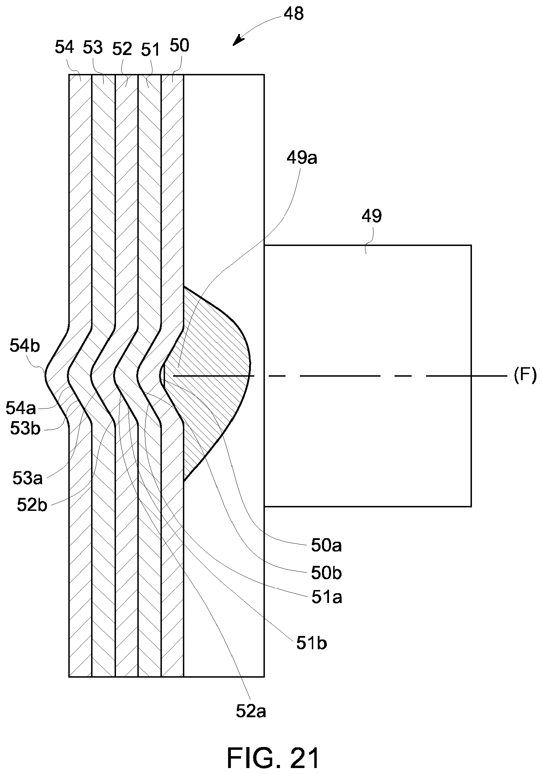

On se réfère à présent à la figure 21 qui illustre une coupe partielle d'un second mode de réalisation d'un rotor 48 pour une machine électrique tournante synchrone ou asynchrone à rotor bobiné, selon une direction axiale.

Le rotor 48 comprend un demi-arbre 49 comprenant un moyen de blocage comprenant un bossage 49a situé en son centre réalisé par exemple par usinage et des tôles magnétiques circulaires 50, 51, 52, 53 et 54 toutes identiques empilées sur le demi-arbre 49, et un axe de rotation (F).

Chaque tôle 50, 51, 52, 53 et 54 comprend un moyen de blocage situé en son centre et comprenant un bossage comprenant une première face 50a, 51a, 52a, 53a et 54a formant une cavité et une deuxième face 50b, 51b, 52b, 53b et 54b en saillie à partir de la tôle magnétique opposée à la première face selon le cinquième mode de réalisation des moyens de blocage illustré à la figure 15.

La deuxième face 50b, 51b, 52b et 53b de chaque bossage des tôles magnétiques 50, 51, 52 et 53 s'insère dans la première face 51a, 52a, 53a et 54a de chaque bossage et le bossage 49a du demi-arbre 49 s'insère dans la première face 50a de la tôle magnétique 50.

Selon un autre mode de réalisation non représenté, le bossage 49a est remplacé par une cavité venant recevoir avec ou sans jeu les deuxièmes faces 50b, 51b, 52b, 53b et 54b en saillie.

Selon un autre mode de réalisation du rotor représenté à la figure 21, le rotor comprend à une première extrémité un demi-arbre comprenant un bossage 49a, et comprend à une deuxième extrémité un deuxième demi-arbre comprenant une cavité coopérant avec la face en saillie de la tôle magnétique.

Les moyens de blocage de chaque tôle magnétique sont insérés de préférence sans jeu dans des moyens de blocage des éléments adjacents, chaque élément adjacent comprenant une tôle magnétique ou un demi-arbre.

Les tôles magnétiques sont immobilisées selon une direction radiale afin d'améliorer la résistance du rotor 48 aux chocs et/ou aux vibrations.

Selon un autre mode de réalisation non représenté, le rotor 48 comprend un demi-arbre 49 comprenant plusieurs bossages référencés 49a répartis uniformément ou sensiblement uniformément sur un diamètre proche du centre du demi-arbre 49.

Chaque bossage référencé 49a est réalisé par exemple par usinage et vient s'insérer de préférence sans jeu dans une cavité référencée 50a.

Les bossages additionnels permettent en outre d'immobiliser tangentiellement les tôles magnétiques de manière à améliorer la résistance du rotor 48 à l'effet du couple.

Selon un autre mode de réalisation non représenté, un rotor pour une machine électrique tournante asynchrone comprend un demi-arbre référencé 49, un disque de court-circuit inséré entre le demi-arbre et les tôles magnétiques.

Selon un mode de réalisation, le disque de court-circuit comprend le bossage référencé 49a en son centre.

Selon un autre mode de réalisation, le disque de court-circuit comprend au moins deux bossages référencés 49a uniformément ou sensiblement uniformément répartis sur un diamètre proche du centre du disque de court-circuit.

Les bossages sont par exemple réalisés par usinage et viennent de préférence s'insérer sans jeu dans des cavités référencées 50a des tôles magnétiques. Le disque de court-circuit et les tôles magnétiques sont immobilisés dans une direction radiale et/ou dans une direction tangentielle.

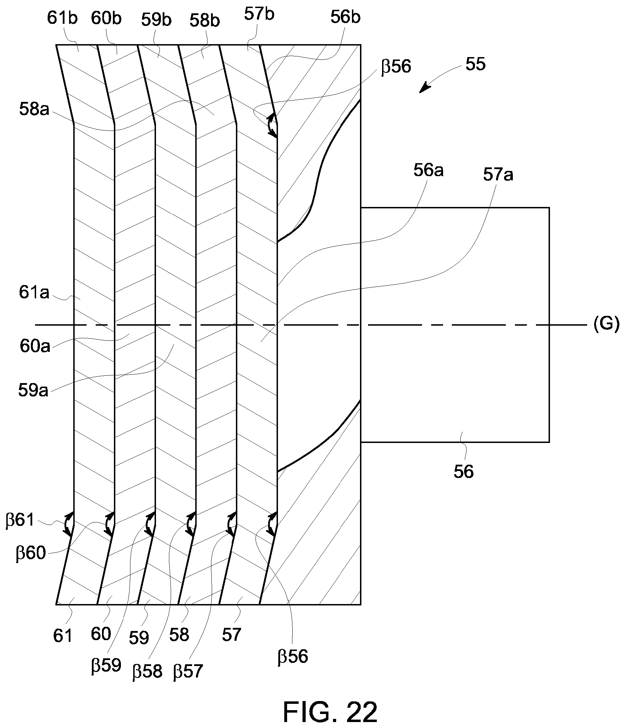

On se réfère à la figure 22 qui illustre une coupe partielle d'un troisième mode de réalisation d'un rotor 55 pour une machine électrique tournante synchrone ou asynchrone à rotor bobiné selon une direction axiale.

Le rotor 55 comprend un neuvième mode de réalisation des moyens de blocage des tôles magnétiques.

Le rotor 55 comprend un demi-arbre 56, un axe de rotation (G) et des tôles magnétiques circulaires 57, 58, 59, 60 et 61 toutes identiques ou sensiblement identiques, empilées sur le demi-arbre 56.

Le demi-arbre 56 comprend une partie centrale 56a et une partie périphérique 56b située sur une périphérie extérieure de l'arbre, les deux parties étant en contact avec la tôle magnétique référencée 57.

Les parties centrale 56a et périphérique 56b forment un angle β56.

Chaque tôle magnétique 57, 58, 59, 60 et 61 comprend une partie centrale 57a, 58a, 59a, 60a et 61a et une partie périphérique 57b, 58b, 59b, 60b et 61b située sur une périphérie extérieure de la tôle magnétique.

La partie centrale 57a, 58a, 59a, 60a, 61a et la partie périphérique 57b, 58b, 59b, 60b et 61b de la tôle magnétique 57, 58, 59, 60 et 61 forment un angle β57, β58, β59, β60 et β61 obtenu par pliage de la tôle magnétique.

L'angle β56, β57, β58, β59, β60 et β61 et les dimensions de la partie périphériques 56b, 57b, 58b, 59b, 60b et 61b de chaque tôle et du demi-arbre sont dimensionnés de sorte que chaque tôle magnétique s'insère dans des éléments adjacents de sorte que la partie périphérique coopère avec la partie périphérique des éléments adjacents de manière d'empêcher un déplacement radial de la tôle magnétique par rapport aux éléments adjacents.

Chaque élément comprend une tôle magnétique ou le demi-arbre.

Les moyens de blocage radial de tôles magnétiques comprennent la partie périphérique 56b du demi-arbre 56 et les parties périphériques 57b, 58b, 59b, 60b et 61b des tôles magnétiques 57, 58, 59, 60 et 61.

Avantageusement, la partie périphérique permet en outre de compenser les défauts d'épaisseur moindre des tôles magnétiques 57 à 61 provoqués par le laminage des tôles magnétiques connus sous les termes lignes de rives et d'augmenter la pression de compactage axial dans la partie périphérique des tôles magnétiques augmentant la rigidité en flexion et en torsion du rotor dépendantes de la qualité du compactage des tôles en leur périphérie.

Selon un autre mode de réalisation non représenté, un rotor pour une machine électrique tournante asynchrone comprend un demi-arbre référencé 56, un disque de court-circuit inséré entre le demi-arbre et les tôles magnétiques.

Le disque de court-circuit comprend une partie centrale et une partie périphérique tel que décrit précédemment. Les parties centrale et périphérique du disque de court-circuit et des tôles magnétiques forment un angle β obtenu respectivement par usinage et pliage des tôles magnétiques.

Les parties centrale et périphérique du disque de court-circuit et des tôles magnétiques s'insèrent dans des éléments adjacents pour bloquer radialement les tôles magnétiques.

Avantageusement, les rotors compensent les défauts d'épaisseur moindre des tôles magnétiques en périphérie.

Selon d'autres modes de réalisation, chaque tôle magnétique peut comporter des moyens de blocage selon l'un des quatrième, cinquième, sixième, septième et huitième mode de réalisations tels de définis précédemment aux figures 11, 13, 14, 15, 16, 17 et 18 et des moyens de blocage selon le neuvième mode de réalisation tel que définis à la figure 22.

Les demi-arbres et le cas échéant les disques de court-circuit sont conçus de manière à coopérer avec les tôles magnétiques.

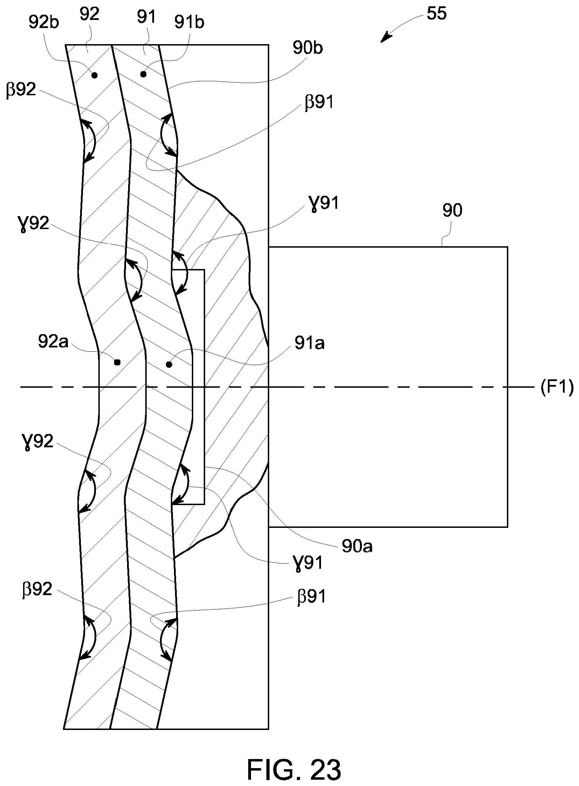

On se réfère à la figure 23 qui illustre une coupe partielle d'un quatrième mode de réalisation d'un rotor 55 pour une machine électrique tournante synchrone ou asynchrone à rotor bobiné, selon une direction axiale.

Le rotor 55 comprend un demi-arbre 90, un axe de rotation (F1) et des tôles magnétiques circulaires 91 et 92 identiques ou sensiblement identiques, empilées sur le demi-arbre 90.

Le demi-arbre 90 comprend une partie centrale 90a et une partie périphérique 90b située sur une périphérie extérieure de l'arbre, la partie périphérique 90b étant en contact avec la tôle magnétique référencée 91.

Les parties centrale 91a, 92a et périphérique 91b, 92b forment un premier angle β91, β92 et un deuxième angle γ91, Y92.

La partie centrale 90a du demi-arbre 90 comprend en son centre un trou borgne ou un lamage.

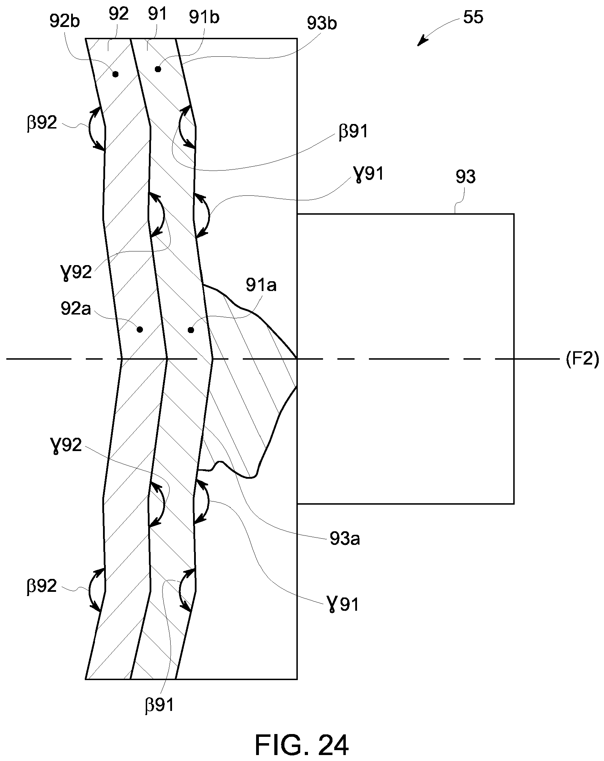

On se réfère à la figure 24 qui illustre une coupe partielle d'un cinquième mode de réalisation d'un rotor 55 pour une machine électrique tournante synchrone ou asynchrone à rotor bobiné, selon une direction axiale.

Le rotor 55 comprend un demi-arbre 93, un axe de rotation (F2) et les tôles magnétiques circulaires 91 et 92 identiques ou sensiblement identiques, empilées sur le demi-arbre 93.

Le demi-arbre 93 comprend une partie centrale 93a et une partie périphérique 93b située sur une périphérie extérieure de l'arbre, la partie centrale 93a et la partie périphérique 93b étant en contact avec la tôle magnétique référencée 91.

Les parties centrale 91a, 92a et périphérique 91b, 92b forment un premier angle β91 et β92 et un deuxième angle Y91 et Y92.

La partie centrale 93a du demi-arbre 93 comprend en son centre une deuxième cavité, de forme conique à angle γ91.

Le lamage, le trou borgne ou la deuxième cavité, augmentent le compactage axial de la périphérie des tôles magnétiques par rapport au compactage axial du centre des tôles magnétiques.

En outre, ce mode de réalisation augmente la rigidité du rotor en flexion et en torsion et est préférentiellement mis en œuvre lorsque le maximum d'épaisseur des tôles magnétiques se situe en leur centre diminuant le compactage axial de la périphérie des tôles magnétiques et par conséquent la rigidité du rotor qui dépend de la qualité du compactage de la périphérie des tôles magnétiques.

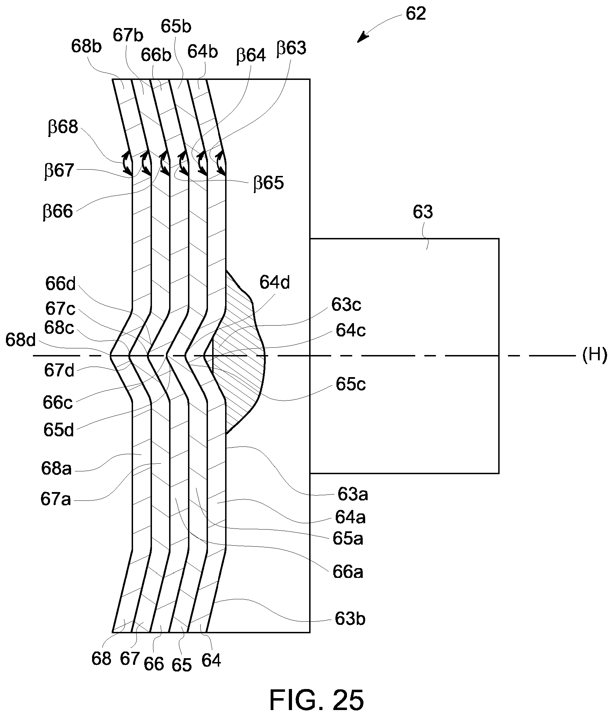

La figure 25 illustre un exemple d'une coupe partielle d'un sixième mode de réalisation d'un rotor 62 pour une machine électrique tournante synchrone ou asynchrone à rotor bobiné, selon une direction axiale.

Dans ce mode de réalisation chaque tôle et chaque demi-arbre comprennent des moyens de blocage selon le cinquième mode de réalisation illustré à la figure 15 et le neuvième mode de réalisation illustré à la figure 22.

Le rotor 62 comprend un demi-arbre 63, un axe de rotation (H) et des tôles magnétiques circulaires 64, 65, 66, 67 et 68 toutes identiques ou sensiblement identiques empilées sur le demi-arbre 63.

Le demi-arbre 56 comprend une partie centrale 63a et une partie périphérique 63b située sur une périphérie extérieure de l'arbre, les deux parties étant en contact avec la tôle magnétique référencée 64.

Les parties centrale 63a et périphérique 63b forment un angle β63.

La partie centrale comprend un demi-arbre 63 comprenant un moyen de blocage comprenant un bossage 63c situé en son centre, réalisé par exemple par usinage.

Chaque tôle magnétique 64, 65, 66, 67 et 68 comprend une partie centrale 64a, 65a, 66a, 67a et 68a et une partie périphérique 64b, 65b, 66b, 67b et 68b située sur une périphérie extérieure de la tôle magnétique.

Chaque partie centrale 64a, 65a, 66a, 67a et 68a et chaque partie périphérique 64b, 65b, 66b, 67b et 68b d'une même tôle magnétique forment un angle β64, β65, β66, β67 et β68. En d'autres termes, la partie périphérique obtenue par emboutissage est pliée.

Chaque partie centrale 64a, 65a, 66a, 67a et 68a comprend un premier moyen de blocage situé en son centre et comprenant un bossage comprenant une première face 64c, 65c, 66c, 67c et 68c formant une cavité et une deuxième face 64d, 65d, 66d, 67d et 68d en saillie à partir de la tôle magnétique opposée à la première face selon le cinquième mode de réalisation illustré à la figure 15.

La deuxième face 64d, 65d, 66d et 67d de chaque bossage des tôles magnétiques s'insère dans la première face 65c, 66c, 67c et 68c de chaque bossage et le bossage 63c du demi-arbre 63 s'insère dans la première face 64c de la tôle magnétique 64.

Selon un autre mode de réalisation non représenté, le bossage 63c est remplacé par une cavité, coopérant avec ou sans jeu avec la face en saillie de la tôle magnétique.

L'angle β63, β64, β65, β66, β67 et β68 et les dimensions de la partie périphérique 64b, 65b, 66b, 67b, 68b de chaque tôle et 63b du demi-arbre sont dimensionnés de sorte que chaque tôle magnétique s'insère dans des éléments adjacents de sorte que la partie périphérique coopère avec la partie périphérique des éléments adjacents de manière d'empêcher un déplacement radial de la tôle magnétique par rapport aux éléments adjacents formant un deuxième moyen de blocage.

Le rotor 62 comprend deux moyens de blocage radial des tôles magnétiques.

Avantageusement, la partie périphérique permet en outre de compenser les défauts d'épaisseur moindre des tôles magnétiques 64, 65, 66, 67 et 68 provoqués par le laminage des tôles magnétiques connus sous les termes lignes de rives et d'augmenter la pression de compactage dans la partie périphérique des tôles magnétiques.

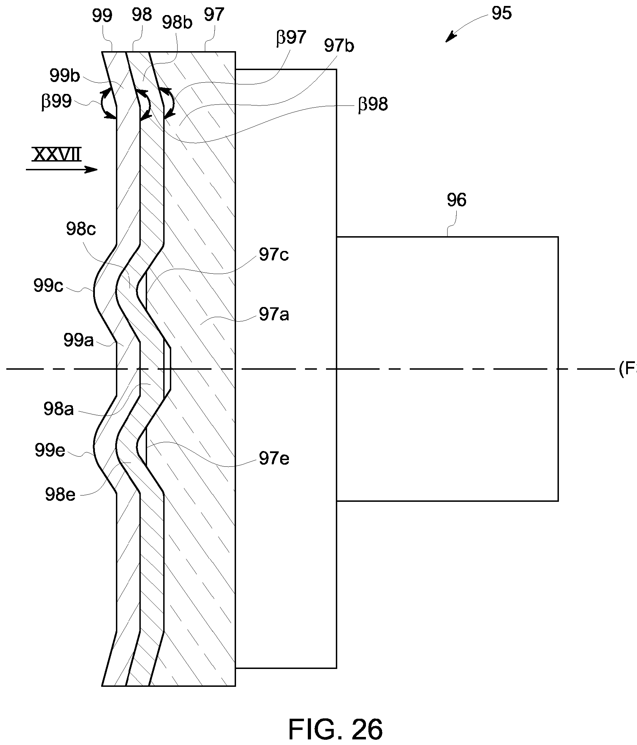

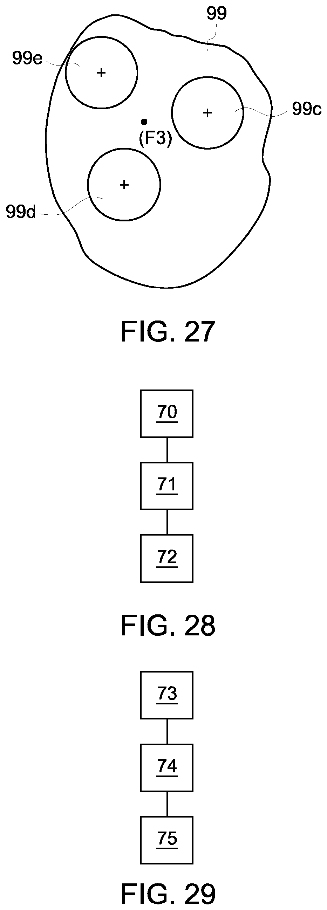

Les figures 26 et 27 illustrent un exemple d'un septième mode de réalisation d'un rotor 95 pour une machine électrique tournante asynchrone.

On se réfère plus particulièrement à la figure 26 qui illustre une coupe partielle de l'exemple du septième mode de réalisation du rotor 95 pour une machine électrique tournante asynchrone, selon une direction axiale.

Dans ce mode de réalisation chaque tôle comprend des moyens de blocage selon le cinquième mode de réalisation illustré à la figure 15 et le neuvième mode de réalisation illustré à la figure 22.

Le rotor 95 comprend un demi-arbre 96, un axe de rotation (F3), un disque de court-circuit 97 empilé sur le demi-arbre et des tôles magnétiques circulaires 98 et 99 identiques ou sensiblement identiques empilées sur le disque de court-circuit 97.

Le disque de court-circuit 97 comprend une partie centrale 97a et une partie périphérique 97b située sur une périphérie extérieure du disque de court-circuit, les deux parties étant en contact avec la tôle magnétique référencée 98.

Les parties centrale 97a et périphérique 97b forment un angle β97.

La partie centrale 97a du disque de court-circuit 97 comprend un moyen de blocage comprenant au moins deux bossages, par exemple comme représenté trois bossages 97c, 97d et 97e répartis uniformément ou sensiblement uniformément sur un diamètre proche du centre du disque de court-circuit et réalisé par exemple par usinage.

Chaque tôle magnétique 98 et 99 comprend une partie centrale 98a et 99a et une partie périphérique 98b et 99b située sur une périphérie extérieure de la tôle magnétique.

Chaque partie centrale 98a et 99a et chaque partie périphérique 98b et 99b d'une même tôle magnétique forment un angle β98 et β99. En d'autres termes, la partie périphérique obtenue par emboutissage est pliée, ou formée par le compactage axial du circuit magnétique.

Chaque partie centrale 98a et 99a comprend un premier moyen de blocage comprenant trois bossages 98c, 98d, 98e, 99c, 99d et 99e selon le cinquième mode de réalisation illustré à la figure 15 répartis uniformément ou sensiblement uniformément sur un diamètre proche du centre de la tôle magnétique.

Chaque bossage comprend une première face formant une cavité et une deuxième face en saillie à partir de la tôle magnétique opposée à la première face selon le cinquième mode de réalisation illustré à la figure 15.

La deuxième face de chaque bossage des tôles magnétiques s'insère dans la première face de chaque bossage et les bossages 97c, 97d, 97e du disque de court-circuit 97 s'insèrent dans la première face en forme de cavité des bossages 98c, 98d et 98e de la tôle magnétique 98.

L'angle β97, β98 et β99 et les dimensions de la partie périphérique 98b et 99b de chaque tôle et 97b du disque de court-circuit sont dimensionnés de sorte que chaque tôle magnétique s'insère dans des éléments adjacents de sorte que la partie périphérique coopère avec la partie périphérique des éléments adjacents de manière d'empêcher un déplacement radial de la tôle magnétique par rapport aux éléments adjacents formant un deuxième moyen de blocage.

La figure 27 illustre une vue partielle du rotor 95 selon la direction XXVII représentée sur la figure 26.

On retrouve la tôle magnétique 99 comprenant les trois bossages 99c, 99d et 99e répartis uniformément ou sensiblement uniformément sur un diamètre proche du centre de la tôle magnétique.

Le rotor 95 comprend deux moyens de blocage radial et tangentiel améliorant la résistance et la robustesse aux chocs et aux vibrations.

En outre le rotor 95 présente une plus grande résistance au couple de court-circuit électrique du stator ou à une surcharge de couple provoqué par une machine accouplée au rotor.

Selon un autre mode de réalisation non représenté, les bossages 97c, 97d et 97e sont remplacés par des cavités coopérant avec ou sans jeu avec la face en saillie des bossages 98c, 98d et 98e de la tôle magnétique.

On se réfère à la figure 28 qui décrit un premier mode de réalisation d'un rotor.

Lors de l'étape 70, les moyens de blocage sont réalisés sur chacune des tôles magnétiques par emboutissage et/ou poinçonnage de chaque tôle individuellement.

L'opération d'emboutissage et/ou de poinçonnage peut être réalisée séparément ou en même temps que la découpe des tôles magnétiques.

Dans de l'étape 71 suivante, les tôles magnétiques comprenant les moyens de blocage sont insérées entre deux demi-arbres ou deux disques de court-circuit de sorte que les moyens de blocage de chaque tôle magnétique coopèrent avec des éléments adjacents de manière à immobiliser la tôle magnétique selon une direction radiale et/ou tangentielle par rapport aux éléments adjacents.

Dans l'étape 72, des tirants sont insérés dans des trous de maintien de chacune des tôles magnétiques de sorte que les tôles magnétiques soient maintenues compactées entre les deux-demi arbres, ou entre les deux disques de court-circuit eux-mêmes compactés entre deux demi-arbres.

On se réfère à la figure 29 qui décrit un deuxième mode de réalisation d'un rotor.

Lors de l'étape 73, les demi-arbres ou disques de court-circuit sont par exemple usinés de manière à former des moyens de blocage, par exemple des bossages.

Un premier demi-arbre ou un premier disque de court-circuit comprend une partie en saillie destinée à former la première face formant une cavité des bossages des tôles magnétiques, et un deuxième demi-arbre ou un deuxième disque de court-circuit comprend une cavité qui formera la deuxième face en saillie des bossages des tôles magnétiques.

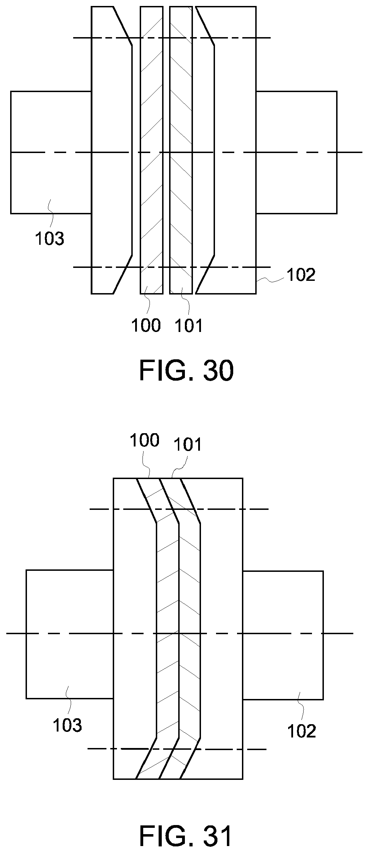

La figure 30 illustre deux tôles magnétiques 100 et 101 et les premier et deuxième demi-arbres 102 et 103 qui formeront le bossage lors du compactage des tôles.

Dans l'étape 74, les tôles magnétiques sont insérées entre les deux demi-arbres ou disques de court-circuit.

Dans l'étape 75, des tirants sont insérés dans des trous de maintien de chacune des tôles magnétiques de sorte que les tôles magnétiques soient compactées entre les deux-demi arbres ou disques de court-circuit.

L'action de serrage des tirants exerce une force de compactage sur les tôles magnétiques entre les demi-arbres ou entre les disques de court-circuit eux même compactés entre les demi-arbres.

Cette force de compactage forme par déformation des tôles magnétiques les moyens de blocage radial et/ou tangentiel dans les tôles magnétiques, comme par exemple des bossages.

La figure 31 illustre la fin du formage des moyens de blocage à la fin du compactage du circuit magnétique entre les deux demi-arbres.

Le second mode de réalisation du rotor requiert une force additionnelle de compactage, ce qui peut conduire à augmenter la taille et/ou le nombre de tirants augmentant le coût du rotor.

Dans le second mode de réalisation du rotor, les moyens de blocage sont réalisés lors de l'étape de compactage des tôles magnétiques, ce qui évite de réaliser les moyens de blocage sur chacune des tôles magnétiques par emboutissage et/ou par poinçonnage de chaque tôle magnétique individuellement diminuant le coût du rotor ou compensant le coût supplémentaire de l'augmentation de la taille et/ou du nombre de tirants.

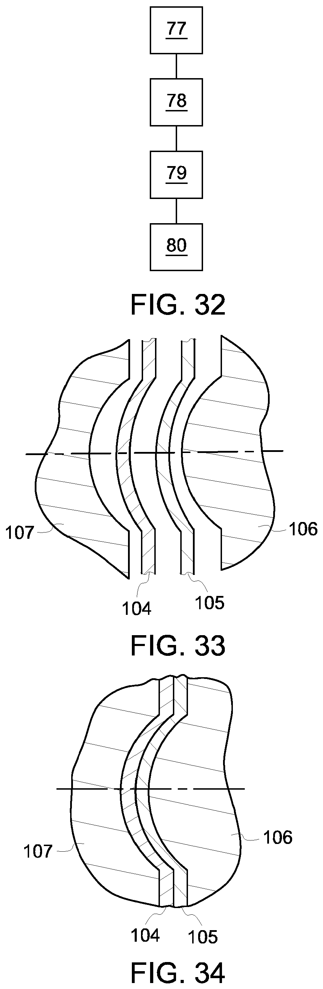

On se réfère à la figure 32 qui décrit un troisième mode de réalisation d'un rotor.

Le troisième mode de réalisation est un compromis entre le premier mode de réalisation illustré à la figure 28 et le deuxième mode de réalisation illustré à la figure 29.

Lors de l'étape 77, les moyens de blocage comprenant par exemple des bossages, sont réalisés partiellement sur chacune des tôles magnétiques, par exemple par emboutissage partiel des bossages dans les tôles magnétiques, lors d'une opération séparée ou simultanée à l'opération de découpe des tôles du rouleau de tôles magnétique provenant de laminage.

Les moyens de blocage radial et/ou tangentiel, par exemple des bossages, sont préformés, c'est-à-dire que les bossages n'ont pas leur forme et leurs dimensions définitives.

La forme et les dimensions définitives des bossages sont obtenues lors d'une étape ultérieure de compactage des tôles magnétiques.

Dans une étape 78, les demi-arbres ou disques de court-circuit sont par exemple usinés de manière à former des moyens de blocage, par exemple des bossages.

Un premier demi-arbre ou un premier disque de court-circuit comprend une partie en saillie destinée à former la première face formant une cavité des bossages des tôles magnétiques, et un deuxième demi-arbre ou un deuxième disque de court-circuit comprend une cavité qui formera la deuxième face en saillie des bossages des tôles magnétiques.

La figure 33 illustre deux tôles magnétiques 104 et 105 comprenant des bossages circulaires préformés lors de l'étape 77 et deux demi-arbres 106 et 107 ou disques de court-circuit.

Le premier demi-arbre 106 comprend une partie en saillie destinée à former la première face formant une cavité des bossages des tôles magnétiques, et le deuxième demi-arbre 107 comprend une cavité qui formera la deuxième face en saillie des bossages des tôles magnétiques.

Dans l'étape 79, les tôles magnétiques sont insérées entre les demi-arbres ou disques de court-circuit de sorte que les moyens de blocage ne soient pas encore à leurs formes et leurs dimensions définitives.

Dans l'étape 80 des tirants sont insérés dans les trous de maintien de chacune des tôles magnétiques, puis les tôles magnétiques sont compactées entre les demi-arbres ou disques de court-circuit de manière à former définitivement les moyens de blocage comprenant des bossages et de sorte que les moyens de blocage se solidarisent par déformation.

Durant cette étape, la deuxième face de chaque bossage s'insère sans jeu dans la première face d'un bossage ou dans un trou conique d'un élément adjacent de sorte que la tôle magnétique soit immobilisée lors du compactage qui finalise la réalisation de la forme et les dimensions définitives des moyens de blocage des tôles magnétiques.

La figure 34 illustre la fin du formage des moyens de blocage à la fin du compactage du circuit magnétique entre les deux demi-arbres 106 et 107 ou entre les disques de court-circuit eux même compactés entre les demi-arbres.

Dans ce mode de réalisation, chaque bossage préformé a sensiblement le même diamètre ou la même dimension périphérique dans leur forme définitive lors du compactage, mais sa forme définitive sera plus profonde lors du compactage.

Selon un autre mode de réalisation non représenté, chaque bossage préformé a sensiblement la même profondeur dans sa forme définitive lors du compactage, mais sa forme définitive sera plus large ou plus étendue en surface lors du compactage, comme par exemple un bossage circulaire avec un diamètre plus grand dans sa forme définitive compactée que le diamètre plus petit de ce bossage préformé à l'étape 77.

Le troisième mode de réalisation est un compromis entre le premier et le deuxième mode de réalisation, car le blocage radial et/ou tangentiel des tôles magnétiques du rotor est de bonne qualité par une coopération sans jeu des bossages adjacents par déformation lors du compactage, mais sans pour autant exiger une grande force supplémentaire de compactage des tirants puisque le bossage n'est pas entièrement formé comme dans le deuxième mode de réalisation mais réalisé plus profondément ou plus largement en partant d'un bossage préformé par l'outil de découpe par exemple, ou par emboutissage et/ou poinçonnage lors d'une étape de fabrication des tôles magnétiques.

Le bossage par emboutissage est réalisé de préférence sur sensiblement au moins une fois l'épaisseur de la tôle magnétique, de préférence sur sensiblement deux à trois fois l'épaisseur de la tôle.

L'opération de poinçonnage et/ou d'emboutissage, lorsqu'elle est réalisée au préalable du compactage du circuit magnétique du rotor, est réalisée de préférence individuellement sur chaque tôle magnétique.

Le bossage ou le moyen de blocage n'est pas retiré de la tôle magnétique.

Il est à noter qu'il n'y a pas de procédé de collage des tôles magnétiques.

Le bossage ou le moyen de blocage n'est pas supprimé dans une quelconque étape de réalisation du rotor.

Avantageusement les moyens de blocage radial et/ou tangentiel empêchent un déplacement des tôles magnétiques compactées entre deux demi-arbres d'un rotor avec un arbre non traversant lorsque le rotor est en rotation sur toute la durée de vie de ce dernier, le rotor étant plus robuste aux chocs, aux vibrations et aux surcouples.

Les tôles magnétiques sont maintenues avantageusement lorsque leur température est supérieure à la température de transition vitreuse du vernis recouvrant ces dernières.

La vitesse de rotation ou la température du rotor n'est plus limitée. Par conséquent pour une machine électrique de volume donnée, la puissance électrique de cette dernière peut être augmentée sans modification de son architecture représentant un avantage technique et commercial.

Bien entendu la machine électrique tournante peut fonctionner en mode moteur ou générateur, peut être synchrone, asynchrone à rotor bobiné ou asynchrone à rotor à cage d'écureuil.

## Revendications

1. Rotor avec un arbre non traversant sans évidement en son centre pour machine électrique tournante comprenant une pluralité de tôles magnétiques compactées entre deux demi-arbres (14, 41, 46,49, 56, 63) reliés par des tirants (15) et comportant des trous de maintien circulaire, les tirants étant insérés dans les trous de maintien et séparés du bord des trous de maintien par des jeux,
- chaque tôle magnétique (12, 12a, 12b, 24, 25, 42, 43, 44, 50, 51, 52, 53, 54, 57, 58, 59, 60, 61, 54, 65, 66, 67, 68) comprenant le même nombre de moyens de blocage (19a, 19b, 19c, 19d, 26, 27a, 27b, 27c, 27d, 27e, 27f, 27g, 27h, 28),
- au moins un moyen de blocage comportant un bossage comprenant une première face (20, 22, 28a, 29a, 30a, 32a, 33a, 34a, 36a, 38a, 39a, 42a, 43a, 44a, 50a, 21a, 52a, 53a, 54a, 64a, 65a, 66a, 67a, 68a) formant une cavité et une deuxième face (21, 23, 28b, 29b, 30b, 32b, 33b, 34b, 36b, 38b, 39b, 42b, 43b, 44b, 50b, 51b, 52b, 53b, 54b, 64b, 65b, 66b, 67b, 68b) en saillie à partir de la tôle magnétique opposée à la première face, et un trou,
- une deuxième face du bossage d'une première tôle magnétique de la pluralité de tôles magnétiques coopérant avec un trou d'une deuxième tôle magnétique adjacente de la pluralité de tôles magnétiques de sorte que la deuxième face du bossage de la première tôle magnétique est insérée dans le trou de la deuxième tôle magnétique adjacente, et
- un jeu sépare un premier côté de la deuxième face du bossage d'un bord du trou, et un deuxième côté de la seconde face du bossage est en contact avec le bord du trou.

2. Rotor selon la revendication 1, comprenant au moins deux moyens de blocage différents répartis uniformément sur un diamètre de la tôle.

3. Rotor selon la revendication 2, dans laquelle le moyen de blocage est circulaire, cylindrique, conique ou sensiblement sphérique, carré, triangulaire, polygonal ou oblong (28a, 28b) orienté de sorte que la plus grande dimension soit orientée selon une direction radiale ou selon une direction perpendiculaire à une direction radiale.

4. Rotor selon l'une quelconque des revendications 1 à 3, dans lequel la position des trous de maintien (16) et des moyens de blocage (19a, 19b, 19c, 19d, 26, 27a, 27b, 27c, 27d, 27e, 27f, 27g, 27h, 28) sur la tôle magnétique est déterminée de sorte que lors de l'assemblage de tôles magnétiques, chaque tôle magnétique (12, 12a, 12b, 24, 25, 42, 43, 44, 50, 51, 52, 53, 54, 57, 58, 59, 60, 61, 54, 65, 66, 67, 68) issue d'un même rouleau laminé est décalée d'un angle prédéterminé, par exemple d'un angle de 120°, de préférence 90°.

5. Rotor selon l'une des revendications 1 à 4, dans lequel le moyen de blocage est apte à coopérer avec un élément adjacent, un élément adjacent de chaque tôle comprend une tôle magnétique, un demi-arbre (14, 41, 46,49, 56, 63) ou un disque de court-circuit (47, 97) comprenant des moyens de blocage coopérant avec les moyens de blocage de ladite tôle magnétique de sorte que les tôles magnétiques soient immobilisées selon une direction radiale et/ou tangentielle du rotor.

6. Rotor selon l'une des revendications 1 à 5, dans lequel au moins un demi-arbre (90, 93) comprend une partie centrale (90a, 93a) comprenant en son centre un trou borgne, un lamage ou une cavité de forme conique à angle (γ91).

7. Machine électrique tournante comprenant un rotor selon l'une quelconque des revendications 1 à 6.

8. Procédé d'obtention d'un rotor avec un arbre non traversant sans évidement en son centre pour machine électrique tournante, dans lequel :
- on réalise une pluralité de tôles magnétiques comprenant chacune moins un moyen de blocage (19a, 19b, 19c, 19d, 26, 27a, 27b, 27c, 27d, 27e, 27f, 27g, 27h, 28), le moyen de blocage comprenant une première face (20, 22, 28a, 29a, 30a, 32a, 33a, 34a, 36a, 38a, 39a, 42a, 43a, 44a, 50a, 21a, 52a, 53a, 54a, 64a, 65a, 66a, 67a, 68a) formant une cavité et une deuxième face (21, 23, 28b, 29b, 30b, 32b, 33b, 34b, 36b, 38b, 39b, 42b, 43b, 44b, 50b, 51b, 52b, 53b, 54b, 64b, 65b, 66b, 67b, 68b) en saillie à partir de la tôle magnétique opposée à la première face, et un trou,
- on insère entre deux demi-arbres la pluralité de tôles magnétiques de sorte qu'une deuxième face du bossage d'une première tôle magnétique de la pluralité de tôles magnétiques coopère avec un trou d'une deuxième tôle magnétique adjacente de la pluralité de tôles magnétiques afin de que la deuxième face du bossage de la première tôle magnétique soit insérée dans le trou de la deuxième tôle magnétique adjacente, un jeu séparant un premier côté de la deuxième face du bossage d'un bord du trou, et un deuxième côté de la seconde face du bossage étant en contact avec le bord du trou, et
- on insère des tirants passant par des trous de maintien de chacune des tôles magnétiques et reliant les deux-demi arbres de sorte que les tôles magnétiques soient maintenues compactées entre les deux demi-arbres, les tirants étant séparés du bord des trous de maintien par des jeux.

9. Procédé selon la revendication 8, dans lequel on réalise le bossage par poinçonnage de préférence sur sensiblement une demi-épaisseur de tôle.

10. Procédé selon la revendication 8 ou 9, dans lequel on réalise les moyens de blocage lorsque la tôle magnétique est insérée et compactée entre deux demi-arbres ou entre deux disques de court-circuit eux-mêmes compactés entre les demi-arbres.

11. Procédé selon les revendications 8 à 10, dans lequel on réalise partiellement le moyen de blocage par préformage dans la tôle magnétique, et dans lequel la forme et les dimensions définitives du moyen de blocage sont réalisées lors d'une étape de compactage lorsque la tôle magnétique est insérée entre deux demi-arbres ou entre deux disques de court-circuit compactés entre deux demi-arbres.

## Patentansprüche

1. Rotor mit einer nicht durchgehenden Welle ohne Aussparung in ihrer Mitte für eine drehende elektrische Maschine, der eine Vielzahl von magnetischen Blechen umfasst, die zwischen zwei Halbwellen (14, 41, 46, 49, 56, 63) verdichtet sind, die durch Zugstangen (15) verbunden sind und kreisförmige Haltelöcher aufweisen, wobei die Zugstangen in die Haltelöcher eingeführt und durch Spielräume vom Rand der Haltelöcher getrennt sind,
- wobei jedes magnetische Blech (12, 12a, 12b, 24, 25, 42, 43, 44, 50, 51, 52, 53, 54, 57, 58, 59, 60, 61, 54, 65, 66, 67, 68) die gleiche Anzahl von Sperrmitteln (19a, 19b, 19c, 19d, 26, 27a, 27b, 27c, 27d, 27e, 27f, 27g, 27h, 28) umfasst,
- mindestens ein Sperrmittel eine Erhebung aufweist, die eine erste Seite (20, 22, 28a, 29a, 30a, 32a, 33a, 34a, 36a, 38a, 39a, 42a, 43a, 44a, 50a, 21a, 52a, 53a, 54a, 64a, 65a, 66a, 67a, 68a), die einen Hohlraum bildet, und eine zweite Seite (21, 23, 28b, 29b, 30b, 32b, 33b, 34b, 36b, 38b, 39b, 42b, 43b, 44b, 50b, 51b, 52b, 53b, 54b, 64b, 65b, 66b, 67b, 68b), die von dem der ersten Seite gegenüberliegenden magnetischen Blech vorsteht, sowie ein Loch umfasst,
- eine zweite Seite der Erhebung eines ersten magnetischen Blechs der Vielzahl von magnetischen Blechen mit einem Loch eines zweiten benachbarten magnetischen Blechs der Vielzahl von magnetischen Blechen zusammenwirkt, so dass die zweite Seite der Erhebung des ersten magnetischen Blechs in das Loch des zweiten benachbarten magnetischen Blechs eingesetzt ist, und
- ein Spielraum eine erste Seite der zweiten Erhebungsseite von einem Rand des Lochs trennt, und eine zweite Seite der zweiten Erhebungsseite mit dem Rand des Lochs in Kontakt steht.

2. Rotor nach Anspruch 1, umfassend mindestens zwei unterschiedliche, gleichmäßig über einen Durchmesser des Blechs verteilte Sperrmittel.

3. Rotor nach Anspruch 2, wobei das Sperrmittel kreisförmig, zylindrisch, konisch oder im Wesentlichen kugelförmig, quadratisch, dreieckig, polygonal oder länglich (28a, 28b) ist und so ausgerichtet ist, dass die größte Abmessung in einer radialen Richtung oder in einer zu einer radialen Richtung senkrechten Richtung ausgerichtet ist.

4. Rotor nach einem der Ansprüche 1 bis 3, wobei die Position der Haltelöcher (16) und der Sperrmittel (19a, 19b, 19c, 19d, 26, 27a, 27b, 27c, 27d, 27e, 27f, 27g, 27h, 28) auf dem magnetischen Blech so bestimmt wird, dass beim Zusammenbau von magnetischen Blechen jedes magnetische Blech (12, 12a, 12b, 24, 25, 42, 43, 44, 50, 51, 52, 53, 54, 57, 58, 59, 60, 61, 54, 65, 66, 67, 68), das aus derselben Walzrolle stammt, um einen vorgegebenen Winkel, beispielsweise um 120°, vorzugsweise um 90°, versetzt ist.

5. Rotor nach einem der Ansprüche 1 bis 4, wobei wobei das Sperrmittel mit einem benachbarten Element zusammenwirken kann, ein benachbartes Element jedes Blechs ein magnetisches Blech, eine Halbwelle (14, 41, 46, 49, 56, 63) oder eine Kurzschlussscheibe (47, 97) umfasst, die Sperrmittel umfasst, die mit den Sperrmitteln des magnetischen Blechs zusammenwirken, sodass die magnetischen Bleche in einer radialen und/oder tangentialen Richtung des Rotors immobilisiert sind.

6. Rotor nach einem der Ansprüche 1 bis 5, wobei mindestens eine Halbwelle (90, 93) einen Mittelteil (90a, 93a) umfasst, der in seiner Mitte ein Sackloch, eine Senkbohrung oder einen kegelförmigen Hohlraum mit Winkel (γ91) umfasst.

7. Drehende elektrische Maschine, die einen Rotor nach einem der Ansprüche 1 bis 6 umfasst.

8. Verfahren zum Erhalten eines Rotors mit einer nicht durchgehenden Welle ohne Aussparung in ihrer Mitte für eine drehende elektrische Maschine, wobei:
- eine Vielzahl von magnetischen Blechen hergestellt wird, die jeweils mindestens ein Sperrmittel (19a, 19b, 19c, 19d, 26, 27a, 27b, 27c, 27d, 27e, 27f, 27g, 27h, 28) umfassen, wobei das Sperrmittel eine erste Seite (20, 22, 28a, 29a, 30a, 32a, 33a, 34a, 36a, 38a, 39a, 42a, 43a, 44a, 50a, 21a, 52a, 53a, 54a, 64a, 65a, 66a, 67a, 68a), die einen Hohlraum bildet, und eine zweite Seite (21, 23, 28b, 29b, 30b, 32b, 33b, 34b, 36b, 38b, 39b, 42b, 43b, 44b, 50b, 51b, 52b, 53b, 54b, 64b, 65b, 66b, 67b, 68b), die aus dem gegenüberliegenden magnetischen Blech herausragt, sowie ein Loch umfasst,
- die Vielzahl von magnetischen Blechen so zwischen zwei Halbwellen eingesetzt wird, dass eine zweite Seite der Erhebung eines ersten magnetischen Blechs der Vielzahl von magnetischen Blechen mit einem Loch eines benachbarten zweiten magnetischen Blechs der Vielzahl von magnetischen Blechen zusammenwirkt, so dass die zweite Seite der Erhebung des ersten magnetischen Blechs in das Loch des zweiten benachbarten magnetischen Blechs eingesetzt wird, wobei ein Spielraum eine erste Seitenfläche der zweiten Seite der Erhebung von einem Lochrand trennt, und eine zweite Seitenfläche der zweiten Seite der Erhebung mit dem Lochrand in Kontakt steht, und
- Zugstangen durch die Haltelöcher jedes der magnetischen Bleche eingeführt werden und die beiden Halbwellen verbinden, so dass die magnetischen Bleche zwischen den beiden Halbwellen verdichtet gehalten werden, wobei die Zugstangen durch Spielräume vom Rand der Haltelöcher getrennt sind.

9. Verfahren nach Anspruch 8, wobei die Erhebung durch Stanzen vorzugsweise auf im Wesentlichen eine halbe Blechdicke ausgeführt wird.

10. Verfahren nach Anspruch 8 oder 9, wobei die Sperrmittel hergestellt werden, wenn das magnetische Blech zwischen zwei Halbwellen oder zwischen zwei Kurzschlussscheiben, die selbst zwischen den Halbwellen verdichtet sind, eingesetzt und verdichtet wird.

11. Verfahren nach den Ansprüchen 8 bis 10, wobei das Sperrmittel teilweise durch Vorformen in dem magnetischen Blech hergestellt wird, und wobei die endgültige Form und die endgültigen Abmessungen des Sperrmittels in einem Verdichtungsschritt hergestellt werden, wenn das magnetische Blech zwischen zwei Halbwellen oder zwischen zwei Kurzschlussscheiben, die zwischen zwei Halbwellen verdichtet sind, eingesetzt wird.

## Claims

1. A rotor with a non-through shaft without a recess in its center for a rotating electric machine, comprising a plurality of magnetic sheets compacted between two half-shafts (14, 41, 46, 49, 56, 63) connected by tie rods (15) and having circular retaining holes, the tie rods being inserted into the retaining holes and separated from the edge of the retaining holes by clearances,
- each magnetic sheet (12, 12a, 12b, 24, 25, 42, 43, 44, 50, 51, 52, 53, 54, 57, 58, 59, 60, 61, 54, 65, 66, 67, 68) comprising the same number of locking means (19a, 19b, 19c, 19d, 26, 27a, 27b, 27c, 27d, 27e, 27f, 27g, 27h, 28),
- at least one locking means having a boss comprising a first face (20, 22, 28a, 29a, 30a, 32a, 33a, 34a, 36a, 38a, 39a, 42a, 43a, 44a, 50a, 21a, 52a, 53a, 54a, 64a, 65a, 66a, 67a, 68a) forming a cavity and a second face (21, 23, 28b, 29b, 30b, 32b, 33b, 34b, 36b, 38b, 39b, 42b, 43b, 44b, 50b, 51b, 52b, 53b, 54b, 64b, 65b, 66b, 67b, 68b) projecting away from the magnetic sheet opposite the first face, and a hole,
- a second face of the boss of a first magnetic sheet of the plurality of magnetic sheets cooperating with a hole of an adjacent second magnetic sheet of the plurality of magnetic sheets, in such a way that the second face of the boss of the first magnetic sheet is inserted into the hole of the adjacent second magnetic sheet, and
- a clearance separates a first side of the second face of the boss from an edge of the hole, and a second side of the second face of the boss is in contact with the edge of the hole.

2. The rotor as claimed in claim 1, comprising at least two different locking means distributed uniformly over a diameter of the sheet.

3. The rotor as claimed in claim 2, wherein the locking means is circular, cylindrical, conical or substantially spherical, square, triangular, polygonal or oblong (28a, 28b), and oriented in such a way that the largest dimension is oriented along a radial direction or along a direction perpendicular to a radial direction.

4. The rotor as claimed in any one of claims 1 to 3, wherein the position of the retaining holes (16) and the locking means (19a, 19b, 19c, 19d, 26, 27a, 27b, 27c, 27d, 27e, 27f, 27g, 27h, 28) on the magnetic sheet is determined in such a way that during the assembly of magnetic sheets, each magnetic sheet (12, 12a, 12b, 24, 25, 42, 43, 44, 50, 51, 52, 53, 54, 57, 58, 59, 60, 61, 54, 65, 66, 67, 68) from the same rolled roll is offset by a predetermined angle, for example by an angle of 120°, preferably 90°.

5. The rotor as claimed in one of claims 1 to 4, wherein the locking means is configured to cooperate with an adjacent element, an adjacent element of each sheet comprises a magnetic sheet, a half-shaft (14, 41, 46, 49, 56, 63) or a short-circuit disk (47, 97) comprising locking means cooperating with the locking means of said magnetic sheet, in such a way that the magnetic sheets are immobilized along a radial and/or tangential direction of the rotor.

6. The rotor as claimed in any one of claims 1 to 5, wherein at least one half-shaft (90, 93) comprises a central portion (90a, 93a) comprising in its center a blind hole, a counterbore or a cavity with an angled conical shape (ü91).

7. A rotating electric machine comprising a rotor as claimed in any one of claims 1 to 6.

8. A method for obtaining a rotor with a non-through shaft without a recess in its center for a rotating electric machine, wherein:
- a plurality of magnetic sheets are produced, each comprising at least one locking means (19a, 19b, 19c, 19d, 26, 27a, 27b, 27c, 27d, 27e, 27f, 27g, 27h, 28), the locking means comprising a first face (20, 22, 28a, 29a, 30a, 32a, 33a, 34a, 36a, 38a, 39a, 42a, 43a, 44a, 50a, 21a, 52a, 53a, 54a, 64a, 65a, 66a, 67a, 68a) forming a cavity and a second face (21, 23, 28b, 29b, 30b, 32b, 33b, 34b, 36b, 38b, 39b, 42b, 43b, 44b, 50b, 51b, 52b, 53b, 54b, 64b, 65b, 66b, 67b, 68b) projecting away from the magnetic sheet opposite the first face, and a hole,
- the plurality of magnetic sheets are inserted between two half-shafts, in such a way that a second face of the boss of a first magnetic sheet of the plurality of magnetic sheets cooperates with a hole of an adjacent second magnetic sheet of the plurality of magnetic sheets so that the second face of the boss of the first magnetic sheet is inserted into the hole of the adjacent second magnetic sheet, a clearance separating a first side of the second face of the boss from an edge of the hole, and a second side of the second face of the boss being in contact with the edge of the hole, and
- tie rods are inserted, which pass through retaining holes of each of the magnetic sheets and connect the two half-shafts in such a way that the magnetic sheets are held compacted between the two half-shafts, the tie rods being separated from the edge of the retaining holes by clearances.

9. The method as claimed in claim 8, wherein the boss is produced by stamping, preferably over substantially a sheet half-thickness.

10. The method as claimed in claim 8 or 9, wherein the locking means are produced when the magnetic sheet is inserted and compacted between two half-shafts or between two short-circuit disks, which are in turn compacted between the half-shafts.

11. The method as claimed in claims 8 to 10, wherein the locking means is partially produced by preforming in the magnetic sheet, and wherein the final shape and the final dimensions of the locking means are produced during a compacting step when the magnetic sheet is inserted between two half-shafts or between two short-circuit disks compacted between two half-shafts.
